# EUROPÄISCHE PATENTANMELDUNG

(11) **EP 4 726 373 A1**
(43) Veröffentlichungstag der Anmeldung: **15.04.2026**
(21) Anmeldenummer: 25207527.0
(22) Anmeldetag: 08.10.2025
(51) Int. Cl.: G01N 21/896, G01M 11/02, G01N 21/958, G02C 13/00, G01N 21/19, G01N 21/21, G01N 21/88

(54) **INSPEKTIONSVERFAHREN, HERSTELLUNGSVERFAHREN UND INSPEKTIONSSYSTEM**

(30) Priorität: 10.10.2024 DE 102024129286; 10.10.2024 DE 102024129285; 10.10.2024 DE 102024129287
(71) Anmelder: Carl Zeiss Jena GmbH, 07745 Jena (DE)
(72) Erfinder: FLEMMING, Marc, 07745 Jena (DE); SCHEIBE, Hannes, 07745 Jena (DE); LUETZ, Andreas, 07745 Jena (DE); JUSSUPOV, David, 07745 Jena (DE); NOBIS, Thomas, 07745 Jena (DE)
(74) Vertreter: Meier, Florian

(57) **Zusammenfassung**

Zum Prüfen eines transparenten Prüflings (11) auf eine Defektfreiheit wird durch ein Beleuchtungssystem (20) eine Durchlicht-Hellfeld-Beleuchtung bereitgestellt. Das Beleuchtungssystem (20) weist eine Konditioniereinrichtung (30) zum Bereitstellen eines auf den transparenten Prüfling (11) einfallenden ersten Strahlenbündels (51) auf, das von einer Oberflächengeometrie des transparenten Prüflings (11) abhängt. Die Konditioniereinrichtung (30) weist eine Kollimationsoptik (31) und einen Retroreflektor (32) und/oder räumlichen Lichtmodulator auf.

## Beschreibung

### TECHNISCHES GEBIET

Die Erfindung betrifft Inspektionsverfahren und Inspektionssysteme für transparente Prüflinge. Die Erfindung betrifft insbesondere derartige Inspektionsverfahren und Inspektionssysteme, die eingerichtet sind, unter Verwendung optischer Techniken zu prüfen, ob ein transparenter Prüfling wenigstens einen Defekt aufweist, der eine Richtung und/oder Intensität optischer Strahlung ändert, und/oder der eine Polarisation optischer Strahlung ändert, und/oder der eine Phasenverschiebung hervorruft. Ausführungsbeispiele der Erfindung betreffen Herstellungsverfahren, die das Inspektionsverfahren aufweisen.

### HINTERGRUND

Transparente optische Komponenten sind wichtige Bestandteile optischer Systeme und optischer Vorrichtungen. Linsen, Prismen und andere optische Komponenten sind beispielhaft hierfür. Defekte einer optischen Komponente, die Strahlung im optischen Spektrum absorbieren und/oder eine Richtungsänderung von Lichtstrahlen bewirken, können die Funktionsweise des optischen Systems und der optischen Vorrichtung beeinträchtigen, in dem oder in der die optische Komponente eingesetzt werden soll. Zur Sicherung der Qualität eines optischen Systems oder einer optischen Vorrichtung, in der eine transparente optische Komponente zu verbauen ist, sind Inspektionsverfahren wünschenswert, mit denen geprüft werden kann, ob die transparente optische Komponente wenigstens einen Defekt aufweist, der eine Richtung und/oder Intensität optischer Strahlung ändert.

Eine menschliche visuelle Prüfung kann ermüdend und monoton sein. Darüber hinaus sind menschlich durchgeführte Sichtprüfungen anfällig für menschliche Fehler, erfordern lange Anlernprozesse und sind schwer skalierbar. Dies führt zu einer Beeinträchtigung der Prüfergebnisse, der Widerholbarkeit und/oder limitiert die Möglichkeiten der Prüfung.

Die US 2 924 142 B1, die WO 2017/046340 A1 und die WO 2019/233935 A1 offenbaren Systeme und Verfahren, die zur Prüfung transparenter Prüflinge einsetzbar sind.

Herkömmliche Verfahren zur Prüfung transparenter Prüflinge weisen unterschiedliche Nachteile im Hinblick auf ihre Komplexität und/oder Anwendbarkeit auf. Beispielsweise erfordern einige herkömmliche Verfahren eine Anpassung der optischen Komponenten und/oder der Auswertung an eine Prüflingsgeometrie des jeweiligen Prüflings. Dadurch wird die Prüfung erschwert. Dies gilt insbesondere im Hinblick auf die Anwendbarkeit von optischen Komponenten, die in potenziell geringen Stückzahlen gefertigt werden, so dass die Implementierung eines spezifisch angepassten Prüfungsaufbaus mit einem Aufwand verbunden ist, der im Hinblick auf die Zahl von Prüfkörpern groß ist.

Eine besondere Herausforderung besteht darin, für unterschiedliche mögliche Prüflingsgeometrien bestimmte Defekttypen (wie beispielsweise: intensitätsändernde und/oder richtungsändernde Defekte; polarisationsändernde Defekte; phasenverschiebende Defekte) zuverlässig zu detektieren.

Es besteht somit weiterhin ein Bedarf in der Technik an Inspektionsverfahren und Inspektionssystemen zur Prüfung transparenter Prüflinge.

### ZUSAMMENFASSUNG

Es ist eine Aufgabe der vorliegenden Erfindung, verbesserte Inspektionsverfahren und Inspektionssysteme bereitzustellen, die eine Prüfung eines transparenten Prüflings im Hinblick darauf erlauben, ob der transparente Prüfling frei von (beispielsweise intensitätsändernden und/oder richtungsändernden und/oder polarisationsändernden und/oder phasenverschiebenden) Defekten ist. Es ist insbesondere eine Aufgabe, derartige Inspektionsverfahren und Inspektionssysteme bereitzustellen, die eine automatisierte oder teilautomatisierte Prüfung im Hinblick auf eine Freiheit von (beispielsweise intensitätsändernden und/oder richtungsändernden und/oder polarisationsändernden und/oder phasenverschiebenden) Defekten ermöglichen. Es ist eine Aufgabe, derartige Inspektionsverfahren und Inspektionssysteme bereitzustellen, die auf Prüflinge mit unterschiedlichen Prüflingsgeometrien anwendbar sind, wobei optional keine Adaption oder Ansteuerung eines Beleuchtungssystems abhängig von der Prüflingsgeometrie erforderlich ist.

Erfindungsgemäß werden ein Inspektionsverfahren, ein Herstellungsverfahren und ein Inspektionssystem angegeben, wie sie in den unabhängigen Ansprüchen definiert sind. Die abhängigen Ansprüche definieren bevorzugte und vorteilhafte Ausführungsbeispiele.

Nach einem Aspekt der Erfindung wird ein Inspektionsverfahren zum Prüfen eines transparenten Prüflings auf eine Defektfreiheit (beispielsweise im Hinblick auf intensitätsändernde und/oder richtungsändernde Defekte) angegeben. Das Inspektionsverfahren weist ein Bereitstellen einer Durchlicht-Hellfeld-Beleuchtung durch ein Beleuchtungssystem auf. Das Beleuchtungssystem weist eine Konditioniereinrichtung zum Bereitstellen eines auf den transparenten Prüfling einfallenden ersten Strahlenbündels auf, das von einer Oberflächengeometrie des transparenten Prüflings derart abhängt, dass nach Durchtritt durch den transparenten Prüfling ein zweites Strahlenbündel resultiert, welches im Falle der Defektfreiheit des transparenten Prüflings ein kollimiertes Strahlenbündel ist. Das Inspektionsverfahren weist ein Erfassen wenigstens eines Bildes des transparenten Prüflings durch eine Bilderfassungseinrichtung bei Beleuchtung des optischen Prüflings mit der Durchlicht-Hellfeld-Beleuchtung auf. Die Konditioniereinrichtung weist eine Kollimationsoptik auf. Die Konditioniereinrichtung weist ferner wenigstens eine der folgenden Komponenten auf, um das erste Strahlenbündel in Richtung des transparenten Prüflings zu lenken: einen Retroreflektor und/oder einen räumlichen Lichtmodulator.

Durch das Inspektionsverfahren werden verschiedene Wirkungen und Vorteile erzielt. Das Inspektionsverfahren ermöglicht eine teilautomatisierte oder vollautomatisierte Prüfung des transparenten Prüflings auf die Defektfreiheit unter Verwendung einer Durchlicht-Hellfeld-Beleuchtung, mit der Defekte in zuverlässiger und robuster Weise sichtbar gemacht werden können. Das erfasste wenigstens eine Bild ist einfach rechnergestützt auswertbar. Durch die Konditioniereinrichtung wird erreicht, dass im Falle der Defektfreiheit ein von der Bilderfassungseinrichtung erfassbares zweites Strahlenbündel resultiert, welches im Falle der Defektfreiheit des transparenten Prüflings ein kollimiertes Strahlenbündel ist. Intensitätsändernde (beispielsweise absorbierende) und/oder richtungsändernde (beispielsweise brechende, streuende und/oder reflektierende) Defekte sind somit dadurch erkennbar, dass überprüft wird, ob das mit der Bilderfassungseinrichtung erfasste zweite Strahlenbündel ein kollimiertes Strahlenbündel ist. Hierzu kann beispielsweise überprüft werden, ob es ein Homogenitätskriterium über seinen Bündelquerschnitt erfüllt. Die Konditioniereinrichtung ist darüber hinaus so ausgestaltbar, dass sie ohne Adaption und/oder Steuerung der Konditioniereinrichtung das erste Strahlenbündel für unterschiedliche Oberflächengeometrien des transparenten Prüflings so erzeugen kann, dass das erste Strahlenbündel von der Oberflächengeometrie abhängt.

Die Konditioniereinrichtung kann das erste Strahlenbündel derart konditionieren, dass das zweite Strahlenbündel im Falle der Defektfreiheit ein Bündel von Parallelstrahlen ist.

Dadurch kann in einfacher und robuster Weise anhand eines Homogenitätskriteriums, das zur Auswertung des wenigstens einen Bildes herangezogen wird, geprüft werden, ob das zweite Strahlenbündel das Bündel von Parallelstrahlen ist und zu einer wenigstens im Wesentlichen homogenen Intensität des wenigstens einen Bildes führt. Dadurch kann die Defektfreiheit im Hinblick auf intensitätsändernde und/oder richtungsändernde Defekte geprüft werden.

Die Konditioniereinrichtung kann das erste Strahlenbündel derart konditionieren, dass bei Vorliegen eines intensitätsändernden und/oder richtungsändernden Defekts des transparenten Prüflings das zweite Strahlenbündel ein Querprofil mit einer durch den intensitätsändernden und/oder richtungsändernden Defekt verursachten Inhomogenität aufweist.

Dadurch kann in einfacher und robuster Weise anhand eines Homogenitätskriteriums, das zur Auswertung des wenigstens einen Bildes herangezogen wird, geprüft werden, ob das zweite Strahlenbündel aufgrund eines intensitätsändernden und/oder richtungsändernden Defekts des transparenten Prüflings von einem Bündel von Parallelstrahlen verschieden ist. Dadurch kann die Inhomogenität in einer Intensität des wenigstens einen Bildes genutzt werden, um einen intensitätsändernden und/oder richtungsändernden Defekt zu erkennen.

Das Beleuchtungssystem kann zum Bereitstellen des ersten Strahlenbündels eine Lichtquelle und die Konditioniereinrichtung aufweisen. Die Konditioniereinrichtung kann den Retroreflektor aufweisen und eingerichtet sein, von der Lichtquelle erzeugtes Licht nach Durchlaufen der Kollimationsoptik durch den transparenten Prüfling auf den Retroreflektor zu lenken, um das erste Strahlenbündel als vom Retroreflektor zurückgeworfenes Strahlenbündel bereitzustellen.

Dadurch kann die Konditioniereinrichtung eine Brechung am transparenten Prüfling in Kombination mit der Retroreflexion durch den Retroreflektor verwenden, um das erste Strahlenbündel so bereitzustellen, dass nach erneuter Brechung am transparenten Prüfling das zweite Strahlenbündel resultiert und dieses im Fall der Defektfreiheit ein kollimiertes Strahlenbündel ist. Die Konditioniereinrichtung kann eine Brechung sowohl beim Eintritt in den transparenten Prüfling als auch beim Austritt aus dem transparenten Prüfling, die bei einer Propagation der bereits durch die Kollimationsoptik gelaufenen Strahlung zum Retroreflektor auftritt, verwenden, um das erste Strahlenbündel so bereitzustellen, dass nach erneuter Brechung am transparenten Prüfling das zweite Strahlenbündel resultiert und dieses im Fall der Defektfreiheit ein kollimiertes Strahlenbündel ist. Eine Adaption und/oder Steuerung des Beleuchtungssystems in Abhängigkeit von der Oberflächengeometrie ist dabei nicht erforderlich. Das Beleuchtungssystem ist dadurch so eingerichtet, dass es für mehrere unterschiedliche Oberflächengeometrien von Prüflingen jeweils ohne Adaption und/oder Steuerung des Beleuchtungssystems das erste Strahlenbündel bereitstellt, indem es die Brechung am transparenten Prüfling und die anschließende Retroreflexion am Retroreflektor nutzt.

Die Konditioniereinrichtung kann eingerichtet sein, das erste Strahlenbündel bereitzustellen, ohne dass die Konditioniereinrichtung in Abhängigkeit von der Oberflächengeometrie angepasst und/oder gesteuert wird.

Dadurch kann in einfacher Weise das erste Strahlenbündel so konditioniert werden, dass die Defektfreiheit im Durchlicht-Hellfeld zuverlässig und robust erkennbar ist.

Die Konditioniereinrichtung kann einen Strahlteiler aufweisen, der das von der Lichtquelle erzeugte Licht nach Durchlaufen der Kollimationsoptik auf den Retroreflektor lenkt.

Dadurch kann das Beleuchtungssystem mit einer kompakten Ausgestaltung so bereitgestellt werden, dass die Defektfreiheit zuverlässig und robust erkennbar ist.

Der Strahlteiler kann das zweite Strahlenbündel zur Bilderfassungseinrichtung transmittieren.

Dadurch kann ein Inspektionssystem, das das Beleuchtungssystem und die Bilderfassungseinrichtung aufweist, mit einer kompakten Ausgestaltung so bereitgestellt werden, dass die Defektfreiheit zuverlässig und robust erkennbar ist.

Das Inspektionsverfahren kann ein Reduzieren oder Eliminieren von Störlichteffekten unter Verwendung mehrerer Polarisationsfilter aufweisen.

Dadurch können Störlichteffekten, die durch eine Reflexion an wenigstens einer Oberfläche des transparenten Prüflings entstehen könnten, reduziert oder eliminiert werden.

Die mehreren Polarisationsfilter können einen zwischen der Lichtquelle und dem Strahlteiler angeordneten ersten Polarisationsfilter, einen zwischen dem transparenten Prüfling und dem Retroreflektor angeordneten zweiten Polarisationsfilter und einen zwischen dem Strahlteiler und der Bilderfassungseinrichtung angeordneten dritten Polarisationsfilter aufweisen.

Dadurch können Störlichteffekten, die durch eine Reflexion an wenigstens einer Oberfläche des transparenten Prüflings entstehen könnten, reduziert oder eliminiert werden, während eine Detektion unterschiedlicher Defekttypen möglich bleibt, einschließlich einer Prüfung der Defektfreiheit im Hinblick auf intensitätsändernde und/oder richtungsändernde Defekte.

Eine dritte Polarisationsrichtung des dritten Polarisationsfilters kann relativ zu einer ersten Polarisationsrichtung des ersten Polarisationsfilters um 90° gedreht sein, so dass durch eine Reflexion an dem transparenten Prüfling verursachte Störlichteffekte reduziert oder eliminiert werden.

Dadurch können Störlichteffekten, die durch eine Reflexion an wenigstens einer Oberfläche des transparenten Prüflings entstehen könnten, reduziert oder eliminiert werden.

Eine zweite Polarisationsrichtung des zweiten Polarisationsfilters kann relativ zur ersten Polarisationsrichtung des ersten Polarisationsfilters um einen Winkel von wenigstens 10° bis maximal 80°, von wenigstens 20° bis maximal 70°, von wenigstens 30° bis maximal 60° oder von näherungsweise 45° gedreht sein.

Dadurch bleibt eine Prüfung der Defektfreiheit im Hinblick auf intensitätsändernde und/oder richtungsändernde Defekte bei noch ausreichend guter Intensität an der Bilderfassungseinrichtung möglich. Durch Reflexion an dem transparenten Prüfling verursachte Störlichteffekte werden reduziert oder eliminiert, indem die Kombination aus erstem, zweiten und dritten Polarisationsfilter verwendet wird.

Das Inspektionsverfahren kann zum Prüfen des transparenten Prüflings auf polarisationsändernde Defekte eingerichtet sein, wobei eine Polarisationsfilteranordnung, die mehrere Polarisationsfilter aufweist, Strahlen eines zweiten Strahlenbündels, das nach einer Brechung des ersten Strahlenbündels an wenigstens einer Oberfläche des transparenten Prüflings resultiert, bei einer Propagation vom transparenten Prüfling in Richtung der Bilderfassungseinrichtung selektiv abhängig davon blockiert, ob durch einen polarisationsändernden Defekt des transparenten Prüflings eine Polarisationsänderung verursacht wurde.

Die Polarisationsfilteranordnung kann einen ersten Polarisationsfilter, einen zweiten Polarisationsfilter und einen dritten Polarisationsfilter aufweisen. Das Beleuchtungssystem kann ferner eine Lichtquelle aufweisen, deren Licht von der Kollimationsoptik zum Bereitstellen des Auflicht-Strahlenbündels kollimiert wird. Der erste Polarisationsfilter entlang eines Strahlenwegs von der Lichtquelle zum transparenten Prüfling angeordnet sein. Der zweiten Polarisationsfilter kann zwischen dem transparenten Prüfling und dem Retroreflektor angeordnet sein. Der dritten Polarisationsfilter kann zwischen dem transparenten Prüfling und der Bilderfassungseinrichtung angeordnet sein.

Dadurch kann das Inspektionsverfahren eine Prüfung auf Defektfreiheit im Hinblick auf polarisationsändernde Defekte ermöglichen, wobei eine Brechung am transparenten Prüfling selbst im Kombination mit einer Retroreflexion zur Strahlkonditionierung genutzt wird.

Der zweiten Polarisationsfilter kann eingerichtet sein, Licht mit einer durch den ersten Polarisationsfilter festgelegten Polarisation durchzulassen. Der dritten Polarisationsfilter kann eingerichtet sein, das Licht mit der durch den ersten Polarisationsfilter festgelegten Polarisation zu blockieren.

Dadurch kann in einfacher und zuverlässiger Weise das Inspektionsverfahren eine Prüfung auf Defektfreiheit im Hinblick auf polarisationsändernde Defekte ermöglichen. Eine derartige Anordnung und Ausgestaltung der Polarisationsfilter ermöglicht nicht nur eine zuverlässige Detektion polarisationsändernder Defekte, sondern trägt auch zu einer Unterdrückung von Störlichteinflüssen bei.

Der erste Polarisationsfilter kann eine erste Polarisationsrichtung aufweisen, wobei der zweite Polarisationsfilter eine zweite Polarisationsrichtung aufweisen kann, die keine Drehung relativ zur ersten Polarisationsrichtung aufweist, und wobei der dritte Polarisationsfilter eine dritte Polarisationsrichtung aufweisen kann, die relativ zur ersten Polarisationsrichtung um 90° gedreht ist.

Dadurch kann in einfacher und zuverlässiger Weise das Inspektionsverfahren eine Prüfung auf Defektfreiheit im Hinblick auf polarisationsändernde Defekte ermöglichen. Eine derartige Anordnung und Ausgestaltung der Polarisationsfilter ermöglicht nicht nur eine zuverlässige Detektion polarisationsändernder Defekte, sondern trägt auch zu einer Unterdrückung von Störlichteinflüssen bei.

Das Inspektionsverfahren kann zum Prüfen des transparenten Prüflings auf phasenverschiebende Defekte eingerichtet sein, wobei die Lichtquelle kohärentes Licht ausgibt, wobei das Beleuchtungssystem einen ersten Polarisationsfilter, einen Strahlteiler, der das kohärente Licht nach Durchlaufen des ersten Polarisationsfilters auf eine Achse der Abbildungsoptik einkoppelt, eine Prismengruppe und den Retroreflektor aufweist und ein Auflicht-Strahlenbündel, das nach Durchgang des von der Lichtquelle erzeugtem kohärenten Licht durch die Kollimationsoptik, den ersten Polarisationsfilter und die Prismengruppe resultiert, auf den transparenten Prüfling lenkt, so dass es vom Retroreflektor nach Durchgang durch den transparenten Prüfling auf den transparenten Prüfling retroreflektiert wird, um die Durchlicht-Beleuchtung bereitzustellen. Ein zweiter Polarisationsfilter kann zwischen dem Strahlteiler und der Bilderfassungseinrichtung angeordnet sein.

Dadurch kann in einfacher und zuverlässiger Weise das Inspektionsverfahren eine Prüfung auf Defektfreiheit im Hinblick auf phasenverschiebende Defekte ermöglichen. Eine derartige Anordnung und Ausgestaltung der Polarisationsfilter ermöglicht nicht nur eine zuverlässige Detektion polarisationsändernder Defekte, sondern trägt auch zu einer Unterdrückung von Störlichteinflüssen bei.

Die Prismengruppe kann ein erstes Prisma und ein zweites Prisma aufweisen, wobei das erste Prisma und das zweite Prisma relativ zueinander beweglich gelagert sind, wobei das erste Prisma ein erstes doppelbrechendes Prisma aufweist und wobei das zweite Prisma ein zweites doppelbrechendes Prisma aufweist.

Dadurch kann beispielsweise ein Abstand zwischen den von der Prismengruppe erzeugten Teilstrahlen variiert und/oder eine relative Phasenlage zwischen den Teilstrahlen verändert werden. Dies kann sinnvoll sein, um beispielsweise phasenverschiebende Defekte unterschiedlicher Größe detektierten zu können.

Das Inspektionsverfahren kann ein Hervorrufen einer Bewegung wenigstens einer Komponente der Konditioniereinrichtung durch einen Antrieb aufweisen, um die wenigstens eine Komponente während einer Belichtungszeit zum Erfassen eines Bildes des wenigstens einen Bildes zu bewegen.

Dadurch kann eine Glättung erfolgen, die wenigstens teilweise kompensiert, dass aufgrund der Ausgestaltung des Retroreflektors strahlrichtungsabhängig variierende Verschiebungen zwischen auf den Retroreflektor einfallende und von ihm ausgehende Strahlen auftreten. Die Glättung führt dazu, dass für jede von mehreren Strahlrichtungen die Verschiebung zeitabhängig variiert und somit während der Belichtungszeit geglättet wird.

Die Konditioniereinrichtung kann den Retroreflektor aufweisen, wobei der Antrieb den Retroreflektor bewegt.

Dadurch kann eine Glättung erfolgen, die wenigstens teilweise kompensiert, dass aufgrund der Ausgestaltung des Retroreflektors strahlrichtungsabhängig variierende Verschiebungen zwischen auf den Retroreflektor einfallende und von ihm ausgehende Strahlen auftreten. Die Glättung führt dazu, dass für jede von mehreren Strahlrichtungen die Verschiebung zeitabhängig variiert und somit während der Belichtungszeit geglättet wird.

Die Bewegung kann eine periodische, zweidimensionale, translatorische Bewegung des Retroreflektors sein.

Dadurch kann in vorteilhafter Weise eine Glättung erfolgen, die wenigstens teilweise kompensiert, dass aufgrund der Ausgestaltung des Retroreflektors strahlrichtungsabhängig variierende Verschiebungen zwischen auf den Retroreflektor einfallende und von ihm ausgehende Strahlen auftreten.

Der Antrieb kann einen Exzenterantrieb, insbesondere einen rotationsgesperrten Exzenterantrieb, aufweisen.

Dadurch kann in vorteilhafter Weise eine Glättung erfolgen, die wenigstens teilweise kompensiert, dass aufgrund der Ausgestaltung des Retroreflektors strahlrichtungsabhängig variierende Verschiebungen zwischen auf den Retroreflektor einfallende und von ihm ausgehende Strahlen auftreten.

Der Exzenterantrieb kann ein rotationsgesperrter Exzenterantrieb sein und kann die Bewegung mit einer Periodendauer hervorrufen, wobei die Belichtungszeit dividiert durch die Periodendauer wenigstens gleich drei, wenigstens gleich vier, oder wenigstens gleich fünf ist.

Dadurch kann in vorteilhafter Weise eine Glättung erfolgen, die wenigstens teilweise kompensiert, dass aufgrund der Ausgestaltung des Retroreflektors strahlrichtungsabhängig variierende Verschiebungen zwischen auf den Retroreflektor einfallende und von ihm ausgehende Strahlen auftreten.

Der transparente Prüfling kann eine Linse sein.

Dadurch kann eine Linse auf Defektfreiheit im Hinblick auf intensitätsändernde und/oder richtungsändernde Defekte geprüft werden.

Das Verfahren kann ein automatisches Auswerten des wenigstens einen erfassten Bildes aufweisen, um automatisch zu erkennen, ob die Defektfreiheit gegeben ist.

Dadurch kann die Prüfung auf Defektfreiheit weitergehend automatisiert und anhand reproduzierbarer Kriterien ausgeführt werden.

Nach einem weiteren Aspekt der Erfindung wird ein Inspektionsverfahren zum Prüfen eines transparenten Prüflings auf eine Defektfreiheit im Hinblick auf (beispielsweise intensitätsändernde und/oder richtungsändernde) Defekte. angegeben. Das Inspektionsverfahren weist ein Bereitstellen einer Durchlicht-Hellfeld-Beleuchtung durch ein Beleuchtungssystem auf, wobei das Beleuchtungssystem eine Lichtquelle und eine Konditioniereinrichtung zum Bereitstellen eines auf den transparenten Prüfling einfallenden ersten Strahlenbündels aufweist. Die Konditioniereinrichtung weist eine Kollimationsoptik und einen Retroreflektor auf. Die Konditioniereinrichtung lenkt von der Lichtquelle erzeugtes Licht nach Durchlaufen der Kollimationsoptik durch den transparenten Prüfling auf den Retroreflektor, um mit einem vom Retroreflektor zurückgeworfenen ersten Strahlenbündel den transparenten Prüfling im Durchlicht zu beleuchten. Das Inspektionsverfahren weist ein Erfassen wenigstens eines Bildes des transparenten Prüflings auf.

Durch das Inspektionsverfahren werden verschiedene Wirkungen und Vorteile erzielt. Das Inspektionsverfahren ermöglicht eine teilautomatisierte oder vollautomatisierte Prüfung des transparenten Prüflings auf die Defektfreiheit unter Verwendung einer Durchlicht-Hellfeld-Beleuchtung, mit der Defekte in zuverlässiger und robuster Weise sichtbar gemacht werden können. Das erfasste wenigstens eine Bild ist einfach rechnergestützt auswertbar. Die Konditioniereinrichtung nutzt die Brechung am transparenten Prüfling in Kombination mit der Retroreflexion am Retroreflektor, um das erste Strahlbündel so zu erzeugen, dass es von einer Oberflächengeometrie des transparenten Prüflings abhängig ist. Die Konditioniereinrichtung nutzt die Brechung am transparenten Prüfling in Kombination mit der Retroreflexion am Retroreflektor, um das erste Strahlbündel so zu erzeugen, dass nach Durchgang des ersten Strahlenbündels durch den transparenten Prüfling ein von der Bilderfassungseinrichtung erfassbares zweites Strahlenbündel resultiert, welches im Falle der Defektfreiheit des transparenten Prüflings ein kollimiertes Strahlenbündel ist. Intensitätsändernde (beispielsweise absorbierende) und/oder richtungsändernde (beispielsweise brechende, streuende und/oder reflektierende) Defekte sind somit dadurch erkennbar, dass überprüft wird, ob das mit der Bilderfassungseinrichtung erfasste zweite Strahlenbündel ein kollimiertes Strahlenbündel ist. Hierzu kann beispielsweise überprüft werden, ob es ein Homogenitätskriterium über seinen Bündelquerschnitt erfüllt. Die Konditioniereinrichtung ist so ausgestaltbar, dass sie ohne Adaption und/oder Steuerung der Konditioniereinrichtung das erste Strahlenbündel für unterschiedliche Oberflächengeometrien des transparenten Prüflings derart erzeugen kann, dass das erste Strahlenbündel von der Oberflächengeometrie abhängt.

Die Konditioniereinrichtung kann einen Strahlteiler aufweisen, der das von der Lichtquelle erzeugte Licht nach Durchlaufen der Kollimationsoptik auf den Retroreflektor lenkt.

Dadurch kann das Beleuchtungssystem mit einer kompakten Ausgestaltung so bereitgestellt werden, dass die Defektfreiheit zuverlässig und robust erkennbar ist.

Der Strahlteiler kann das zweite Strahlenbündel zur Bilderfassungseinrichtung transmittieren.

Dadurch kann ein Inspektionssystem, das das Beleuchtungssystem und die Bilderfassungseinrichtung aufweist, mit einer kompakten Ausgestaltung so bereitgestellt werden, dass die Defektfreiheit zuverlässig und robust erkennbar ist.

Das Inspektionsverfahren kann ein Reduzieren oder Eliminieren von Störlichteffekten unter Verwendung mehrerer Polarisationsfilter aufweisen.

Dadurch können Störlichteffekten, die durch eine Reflexion an wenigstens einer Oberfläche des transparenten Prüflings entstehen könnten, reduziert oder eliminiert werden.

Die mehreren Polarisationsfilter können einen zwischen der Lichtquelle und dem Strahlteiler angeordneten ersten Polarisationsfilter, einen zwischen dem transparenten Prüfling und dem Retroreflektor angeordneten zweiten Polarisationsfilter und einen zwischen dem Strahlteiler und der Bilderfassungseinrichtung angeordneten dritten Polarisationsfilter aufweisen.

Dadurch können Störlichteffekten, die durch eine Reflexion an wenigstens einer Oberfläche des transparenten Prüflings entstehen könnten, reduziert oder eliminiert werden, während eine Detektion unterschiedlicher Defekttypen möglich bleibt, einschließlich einer Prüfung der Defektfreiheit im Hinblick auf intensitätsändernde und/oder richtungsändernde Defekte.

Eine dritte Polarisationsrichtung des dritten Polarisationsfilters kann relativ zu einer ersten Polarisationsrichtung des ersten Polarisationsfilters um 90° gedreht sein, so dass durch eine Reflexion an dem transparenten Prüfling verursachte Störlichteffekte reduziert oder eliminiert werden.

Dadurch können Störlichteffekten, die durch eine Reflexion an wenigstens einer Oberfläche des transparenten Prüflings entstehen könnten, reduziert oder eliminiert werden.

Eine zweite Polarisationsrichtung des zweiten Polarisationsfilters kann relativ zur ersten Polarisationsrichtung des ersten Polarisationsfilters um einen Winkel von wenigstens 10° bis maximal 80°, von wenigstens 20° bis maximal 70°, von wenigstens 30° bis maximal 60° oder von näherungsweise 45° gedreht sein.

Dadurch bleibt eine Prüfung der Defektfreiheit im Hinblick auf intensitätsändernde und/oder richtungsändernde Defekte bei noch ausreichend guter Intensität an der Bilderfassungseinrichtung möglich. Durch Reflexion an dem transparenten Prüfling verursachte Störlichteffekte werden reduziert oder eliminiert, indem die Kombination aus erstem, zweiten und dritten Polarisationsfilter verwendet wird.

Weitere optionale Merkmale des Inspektionsverfahrens und die damit jeweils erzielten Wirkungen entsprechen den oben beschriebenen Merkmalen und Wirkungen.

Nach einem weiteren Aspekt der Erfindung wird ein Inspektionsverfahren zum Prüfen eines transparenten Prüflings auf polarisationsändernde Defekte angegeben. Das Inspektionsverfahren weist ein Bereitstellen einer Durchlicht-Beleuchtung durch ein Beleuchtungssystem und ein Erfassen wenigstens eines Bildes durch eine Bilderfassungseinrichtung bei Beleuchtung des optischen Prüflings mit der Durchlicht-Beleuchtung auf. Das Beleuchtungssystem weist eine Kollimationsoptik und einen Retroreflektor auf. Bei dem Inspektionsverfahren lenkt das Beleuchtungssystem ein Auflicht-Strahlenbündel, das von der Kollimationsoptik kollimiert wurde, auf den transparenten Prüfling, so dass es vom Retroreflektor nach Durchgang durch den transparenten Prüfling als ein erstes Strahlenbündel auf den transparenten Prüfling retroreflektiert wird, um die Durchlicht-Beleuchtung bereitzustellen. Eine Polarisationsfilteranordnung, die mehrere Polarisationsfilter aufweist, blockiert Strahlen eines zweiten Strahlenbündels, das nach einer Brechung des ersten Strahlenbündels an wenigstens einer Oberfläche des transparenten Prüflings resultiert, bei einer Propagation vom transparenten Prüfling in Richtung der Bilderfassungseinrichtung selektiv abhängig davon, ob durch einen polarisationsändernden Defekt des transparenten Prüflings eine Polarisationsänderung verursacht wurde.

Durch das Inspektionsverfahren werden verschiedene Wirkungen und Vorteile erzielt. Das Inspektionsverfahren ermöglicht eine teilautomatisierte oder vollautomatisierte Prüfung des transparenten Prüflings auf polarisationsändernde Defekte unter Verwendung einer Durchlicht-Beleuchtung, wobei polarisationsändernde Defekte in zuverlässiger und robuster Weise sichtbar gemacht werden können. Das erfasste wenigstens eine Bild ist einfach rechnergestützt auswertbar. Durch die Kombination aus Kollimationsoptik und Retroreflektor wird erreicht, dass das erste Strahlenbündel abhängig von einer Prüflingsgeometrie automatisch konditioniert wird. Polarisationsändernde Defekte sind aufgrund der selektiven Blockierung, die durch die Polarisationsfilteranordnung bereitgestellt wird, beispielsweise einfach erkennbar, indem überprüft wird, ob ein polarisationsändernder Defekt dazu führt, dass Strahlung die Polarisationsfilteranordnung zur Bilderfassungseinrichtung passiert. Das Beleuchtungssystem ist darüber hinaus so ausgestaltet, dass es ohne Adaption und/oder Steuerung des Beleuchtungssystems das erste Strahlenbündel für unterschiedliche Geometrien (insbesondere unterschiedliche Oberflächengeometrien) des transparenten Prüflings so erzeugen kann, dass das erste Strahlenbündel von der Prüflingsgeometrie derart abhängt, dass nach Brechung an der Oberfläche des Prüflings ein (wenigstens im Wesentlichen) kollimiertes Strahlenbündel resultiert. Dies vereinfacht die Lokalisierung von polarisationsändernden Defekten.

Die Polarisationsfilteranordnung kann Strahlen des zweiten Strahlenbündels blockieren, für die keine Polarisationsänderung verursacht wurde.

Dadurch kann in besonders einfacher und robuster Weise anhand des wenigstens einen Bildes überprüft werden, ob der transparente Prüfling einen polarisationsändernden Defekt aufweist.

Die Polarisationsfilteranordnung kann einen ersten Polarisationsfilter, einen zweiten Polarisationsfilter und einen dritten Polarisationsfilter aufweisen.

Dadurch kann die selektive Blockierung in einfacher Weise erreicht werden, mit der polarisationsändernde Defekte effizient und zuverlässig, insbesondere auch durch rechnergestützte automatische Auswertung des wenigstens einen Bildes, detektierbar sind.

Das Beleuchtungssystem kann ferner eine Lichtquelle aufweisen, deren Licht von der Kollimationsoptik zum Bereitstellen des Auflicht-Strahlenbündels kollimiert wird. Der erste Polarisationsfilter kann entlang eines Strahlenwegs von der Lichtquelle zum transparenten Prüfling angeordnet sein. Der zweiten Polarisationsfilter kann zwischen dem transparenten Prüfling und dem Retroreflektor angeordnet und eingerichtet sein, Licht mit einer durch den ersten Polarisationsfilter festgelegten Polarisation durchzulassen. Der dritten Polarisationsfilter kann zwischen dem transparenten Prüfling und der Bilderfassungseinrichtung angeordnet und eingerichtet sein, das Licht mit der durch den ersten Polarisationsfilter festgelegten Polarisation zu blockieren.

Dadurch kann die selektive Blockierung in einfacher Weise erreicht werden, mit der polarisationsändernde Defekte effizient und zuverlässig, insbesondere auch durch rechnergestützte automatische Auswertung des wenigstens einen Bildes, detektierbar sind.

Der erste Polarisationsfilter kann eine erste Polarisationsrichtung aufweisen, wobei der zweite Polarisationsfilter eine zweite Polarisationsrichtung aufweisen kann, die keine Drehung relativ zur ersten Polarisationsrichtung aufweisen.

Dadurch kann die selektive Blockierung in einfacher Weise erreicht werden, mit der polarisationsändernde Defekte effizient und zuverlässig, insbesondere auch durch rechnergestützte automatische Auswertung des wenigstens einen Bildes, detektierbar sind. Darüber hinaus können Störlichteffekte, die durch Reflexion an der Oberfläche des transparenten Prüflings verursacht werden können, effektiv eliminiert oder reduziert werden.

Der erste Polarisationsfilter kann eine erste Polarisationsrichtung aufweisen, wobei der dritte Polarisationsfilter eine dritte Polarisationsrichtung aufweisen, die relativ zur ersten Polarisationsrichtung um 90° gedreht ist.

Dadurch kann die selektive Blockierung in einfacher Weise erreicht werden, mit der polarisationsändernde Defekte effizient und zuverlässig, insbesondere auch durch rechnergestützte automatische Auswertung des wenigstens einen Bildes, detektierbar sind. Darüber hinaus können Störlichteffekte, die durch Reflexion an der Oberfläche des transparenten Prüflings verursacht werden können, effektiv eliminiert oder reduziert werden.

Das zweite Strahlenbündel kann ein kollimiertes Strahlenbündel sein.

Dadurch können polarisationsändernde Defekte besonders einfach abgebildet und lokalisiert werden.

Die Bilderfassungseinrichtung kann eine Abbildungsoptik aufweisen. Das Auflicht-Strahlenbündel kann entlang einer Achse der Abbildungsoptik auf den transparenten Prüfling einfallen.

Dadurch kann die Prüfung mit einer besonders einfachen Geometrie realisiert werden, in der die Komponenten einfach aufeinander abstimmbar sind.

Der transparente Prüfling kann an der Achse positioniert sein.

Dadurch kann die Prüfung mit einer besonders einfachen Geometrie realisiert werden.

Das Auflicht-Strahlenbündel kann über einen Strahlteiler auf die Achse eingekoppelt werden.

Dadurch kann die Prüfung mit einer besonders einfachen Geometrie realisiert werden.

Der Strahlteiler kann das zweite Strahlenbündel zur Bilderfassungseinrichtung transmittieren.

Dadurch kann ein Inspektionssystem, das das Beleuchtungssystem und die Bilderfassungseinrichtung aufweist, mit einer kompakten Ausgestaltung so bereitgestellt werden, dass eine Prüfung auf polarisationsändernde Defekte zuverlässig und robust ausführbar ist.

Weitere optionale Merkmale des Inspektionsverfahrens und die damit jeweils erzielten Wirkungen entsprechen den oben beschriebenen Merkmalen und Wirkungen.

Nach einem weiteren Aspekt der Erfindung wird ein Inspektionsverfahren zum Prüfen eines transparenten Prüflings auf phasenverschiebende Defekte angegeben, wobei das Inspektionsverfahren aufweist: Bereitstellen einer Durchlicht-Beleuchtung durch ein Beleuchtungssystem; und Erfassen wenigstens eines Bildes durch eine Bilderfassungseinrichtung bei Beleuchtung des transparenten Prüflings mit der Durchlicht-Beleuchtung, wobei die Bilderfassungseinrichtung eine Abbildungsoptik aufweist. Das Beleuchtungssystem weist auf: eine Lichtquelle, die kohärentes Licht ausgibt, eine Kollimationsoptik, einen ersten Polarisationsfilter, einen Strahlteiler, der das kohärente Licht nach Durchlaufen des ersten Polarisationsfilters auf eine Achse der Abbildungsoptik einkoppelt, eine Prismengruppe und einen Retroreflektor. Das Beleuchtungssystem lenkt ein Auflicht-Strahlenbündel, das nach Durchgang des von der Lichtquelle erzeugtem kohärenten Licht durch die Kollimationsoptik, den ersten Polarisationsfilter und die Prismengruppe resultiert, auf den transparenten Prüfling, so dass es vom Retroreflektor nach Durchgang durch den transparenten Prüfling auf den transparenten Prüfling retroreflektiert wird, um die Durchlicht-Beleuchtung bereitzustellen. Ein zweiter Polarisationsfilter ist zwischen dem Strahlteiler und der Bilderfassungseinrichtung angeordnet. Das Beleuchtungssystem weist einen Antrieb auf, der den Retroreflektor während einer Belichtungszeit zum Erfassen eines Bildes des wenigstens einen Bildes bewegt.

Durch das Inspektionsverfahren werden verschiedene Wirkungen und Vorteile erzielt. Das Inspektionsverfahren ermöglicht eine teilautomatisierte oder vollautomatisierte Prüfung des transparenten Prüflings auf phasenverschiebende Defekte unter Verwendung einer Durchlicht-Beleuchtung, wobei phasenverschiebende Defekte in zuverlässiger und robuster Weise sichtbar gemacht werden können. Das erfasste wenigstens eine Bild ist einfach rechnergestützt auswertbar. Durch die Kombination aus Kollimationsoptik, Prismengruppe und Retroreflektor wird erreicht, dass das erste Strahlenbündel abhängig von einer Prüflingsgeometrie automatisch konditioniert wird. Phasenverschiebende Defekte sind beispielsweise einfach und zuverlässig (auch rechnergestützt und somit automatisch) erkennbar, indem die Intensität im erfassten Bild oder den erfassten Bildern ausgewertet wird. Das Beleuchtungssystem ist darüber hinaus so ausgestaltet, dass es die Durchlicht-Beleuchtung für unterschiedliche Geometrien des transparenten Prüflings so erzeugen kann, dass die die Durchlicht-Beleuchtung an die Prüflingsgeometrie angepasst ist. Das Beleuchtungssystem kann das erste Strahlenbündel abhängig von der Prüflingsgeometrie derart erzeugen, dass nach Brechung an der Oberfläche des Prüflings ein (wenigstens im Wesentlichen) kollimiertes Strahlenbündel resultiert. Dies vereinfacht die zuverlässige Detektion phasenverschiebender Defekte. Durch die vom Antrieb bewirkte Bewegung des Retroreflektors während der Bildaufnahme wird eine Glättung erreicht, mit der durch den Retroreflektor verursachte Strahlrichtungsabhängigkeiten in einem Versatz zwischen einfallenden und retroreflektierten Lichtstrahlen geglättet wird. Eine derartige Glättung wird insbesondere auch für von der Prismengruppe erzeugte Teilstrahlen erreicht. Dadurch können phasenverschiebende Defekte besonders zuverlässig erkannt werden.

Die Prismengruppe kann aus einem zum transparenten Prüfling hin gerichteten Lichtstrahl mehrere (beispielsweise zwei) parallele Teilstrahlen mit gleicher Polarisation erzeugen.

Dadurch kann die Kohärenz in Kombination mit der Erzeugung paralleler Teilstrahlen genutzt werden, um zu einer Phasenverschiebung zwischen den Teilstrahlen führende Defekte im Prüfling zu erkennen.

Die Prismengruppe kann die vom transparenten Prüfling zur Prismengruppe zurücklaufenden Teilstrahlen wieder kombinieren.

Dadurch kann die kohärente Überlagerung der den Prüfling ortsversetzt durchlaufenden Teilstrahlen genutzt werden, um durch die Interferenz der Teilstrahlen zu einer Phasenverschiebung zwischen den Teilstrahlen führende Defekte im Prüfling zu erkennen.

Die Bilderfassungseinrichtung kann eine Abbildungsoptik aufweisen (beispielsweise ein telezentrisches Objektiv), die die Achse (beispielsweise eine optische Achse der Abbildungsoptik) definiert. Die Prismengruppe kann aus dem zum transparenten Prüfling hin gerichteten Lichtstrahl, der parallel zur Achse verläuft, zwei parallele Teilstrahlen mit gleicher Polarisation erzeugen, die relativ zueinander in einer Richtung quer zur Achse versetzt sind.

Dadurch kann die Kohärenz in Kombination mit der Erzeugung der parallelen Teilstrahlen genutzt werden, um zu einer Phasenverschiebung zwischen den Teilstrahlen führende Defekte im Prüfling zu erkennen.

Die Prismengruppe kann ein erstes Prisma und ein zweites Prisma aufweisen.

Dadurch kann in effizienter Weise eine Erzeugung der parallelen Teilstrahlen aus einem zum transparenten Prüfling hin gerichteten Lichtstrahl realisiert werden, wobei die Teilstrahlen eine gleiche Polarisation aufweisen. Darüber hinaus können zwei vom transparenten Prüfling kommende Teilstrahlen durch die Prismengruppe kombiniert werden.

Das erste Prisma und das zweite Prisma können relativ zueinander beweglich gelagert sein.

Dadurch kann beispielsweise ein Abstand zwischen den von der Prismengruppe erzeugten Teilstrahlen variiert und/oder eine relative Phasenlage zwischen den Teilstrahlen verändert werden. Dies kann sinnvoll sein, um beispielsweise phasenverschiebende Defekte unterschiedlicher Größe detektierten zu können.

Eine Relativposition des ersten Prismas und des zweiten Prismas kann entlang einer ersten Raumrichtung verstellbar sein.

Dadurch kann beispielsweise ein Abstand zwischen den von der Prismengruppe erzeugten Teilstrahlen variiert und/oder eine relative Phasenlage zwischen den Teilstrahlen verändert werden. Dies kann sinnvoll sein, um beispielsweise phasenverschiebende Defekte unterschiedlicher Größe detektierten zu können.

Die Relativposition kann entlang einer zweiten Raumrichtung, die senkrecht zur ersten Raumrichtung ist, verstellbar sein.

Dadurch kann beispielsweise ein Abstand zwischen den von der Prismengruppe erzeugten Teilstrahlen variiert und/oder eine relative Phasenlage zwischen den Teilstrahlen verändert werden. Dies kann sinnvoll sein, um beispielsweise phasenverschiebende Defekte unterschiedlicher Größe detektierten zu können.

Das Beleuchtungssystem kann eine erste Führungseinrichtung aufweisen, die das erste Prisma bei einer Bewegung entlang der ersten Raumrichtung führt.

Dadurch kann eine Bewegung des ersten Prismas entlang der ersten Raumrichtung, beispielsweise quer zu einer Achse einer Abbildungsoptik der Erfassungseinrichtung, in sicherer Weise, optional auch automatisch, während der Prüfung ausgeführt werden. Dies ermöglicht eine umfängliche Prüfung, die phasenverschiebende Defekte unterschiedlicher Größe und/oder Lage sicher detektieren kann.

Das Beleuchtungssystem kann eine zweite Führungseinrichtung aufweisen, die das zweite Prisma bei einer Bewegung entlang der zweiten Raumrichtung führt.

Dadurch kann eine Bewegung des zweiten Prismas entlang der zweiten Raumrichtung, beispielsweise parallel zu einer Achse einer Abbildungsoptik der Erfassungseinrichtung, in sicherer Weise, optional auch automatisch, während der Prüfung ausgeführt werden. Dies ermöglicht eine umfängliche Prüfung, die phasenverschiebende Defekte unterschiedlicher Größe und/oder Lage sicher detektieren kann.

Das Beleuchtungssystem kann eine Prismen-Antriebseinrichtung aufweisen, die das erste Prisma und/oder das zweite Prisma verstellt.

Dadurch kann eine Bewegung des ersten Prismas und/oder des zweiten Prismas entlang der ersten Raumrichtung und/oder der zweiten Raumrichtung in sicherer Weise und unter Kontrolle eines Steuersystems während der Prüfung ausgeführt werden. Dies ermöglicht eine systematische umfängliche Prüfung, die phasenverschiebende Defekte unterschiedlicher Größe und/oder Lage sicher detektieren kann. Alternativ oder zusätzlich wird die systematische Erfassung mehrerer Bilder bei unterschiedlichen Relativpositionen des ersten Prismas und des zweiten Prismas ermöglicht. Dies kann insbesondere vorteilhaft sein, wenn die mehreren Bilder rechnerisch weiterverarbeitet werden (beispielsweise durch Differenzbildbestimmung), um phasenverschiebende Defekte besonders zuverlässig und robust erkennen zu können.

Die erste Raumrichtung kann senkrecht zu einer optische Achse einer Abbildungsoptik der Bilderfassungseinrichtung sein.

Dadurch kann eine relative Phasenlage zwischen den Teilstrahlen beeinflusst und kontrolliert werden.

Die zweite Raumrichtung kann parallel zur optischen Achse der Abbildungsoptik sein.

Dadurch kann ein Abstand zwischen den erzeugten Teilstrahlen beeinflusst und kontrolliert werden.

Das erste Prisma kann ein erstes doppelbrechendes Prisma aufweisen. Das zweite Prisma kann ein zweites doppelbrechendes Prisma aufweisen.

Dadurch kann in effizienter Weise eine Erzeugung der parallelen Teilstrahlen aus einem zum transparenten Prüfling hin gerichteten Lichtstrahl realisiert werden, wobei die Teilstrahlen eine gleiche Polarisation aufweisen. Darüber hinaus können zwei vom transparenten Prüfling kommende Teilstrahlen durch die Prismengruppe kombiniert werden.

Das erste Prisma und das zweite Prisma können baugleich sein.

Dadurch kann in effizienter Weise eine Erzeugung der parallelen Teilstrahlen aus einem zum transparenten Prüfling hin gerichteten Lichtstrahl realisiert werden, wobei die Teilstrahlen eine gleiche Polarisation aufweisen. Darüber hinaus können zwei vom transparenten Prüfling kommende Teilstrahlen durch die Prismengruppe kombiniert werden.

Das erste Prisma und das zweite Prisma können gegenwirkend angeordnet sein. Die optische Wirkung des ersten Prismas und des zweiten Prismas kann einander entgegengesetzt sein.

Dadurch kann in effizienter Weise eine Erzeugung der parallelen Teilstrahlen aus einem zum transparenten Prüfling hin gerichteten Lichtstrahl realisiert werden, wobei die Teilstrahlen eine gleiche Polarisation aufweisen. Darüber hinaus können zwei vom transparenten Prüfling kommende Teilstrahlen durch die Prismengruppe kombiniert werden.

Das erste Prisma und das zweite Prisma können jeweils ausgewählt sein aus einer Gruppe bestehend aus oder aufweisend: einem Wollaston-Prisma; einem Nomarski-Prisma; ein Rochon-Prisma; ein Senarmont-Prisma.

Dadurch kann in effizienter Weise eine Erzeugung der parallelen Teilstrahlen aus einem zum transparenten Prüfling hin gerichteten Lichtstrahl realisiert werden, wobei die Teilstrahlen eine gleiche Polarisation aufweisen. Darüber hinaus können zwei vom transparenten Prüfling kommende Teilstrahlen durch die Prismengruppe kombiniert werden.

Das erste Prisma und das zweite Prisma können an einer gleichen Seite relativ zum transparenten Prüfling angeordnet sein.

Dadurch wird die Detektion phasenverschiebender Defekte bei Nutzung des transparenten Prüflings zur Konditionierung der Durchlicht-Beleuchtung vereinfacht. Phasenverschiebende Defekte können für unterschiedliche Prüflingsgeometrien zuverlässig detektiert werden.

Der erste Polarisationsfilter kann eine erste Polarisationsrichtung aufweisen. Der zweite Polarisationsfilter kann eine zweite Polarisationsrichtung aufweisen. Die zweite Polarisationsrichtung kann senkrecht zur ersten Polarisationsrichtung sein.

Dadurch kann der zweite Polarisationsfilter als Analysator bei der Detektion phasenverschiebender Defekte dienen.

Der erste Polarisationsfilter kann so angeordnet sein, dass das auf die Prismengruppe vom ersten Polarisationsfilter kommend einfallende Strahlenbündel eine Polarisation aufweist, die um 45° zu den beiden Polarisationsrichtungen gekippt ist, für die ein Bereich des ersten Prismas, auf den das Strahlenbündel zuerst einfällt, unterschiedliche Brechungsindizes aufweist.

Dadurch weist das Strahlenbündel Lichtstrahlen auf, die von der Prismengruppe zu Teilstrahlen mit gleicher Intensität aufgeteilt werden. Dies ist im Hinblick auf den von einem phasenverschiebenden Defekt verursachten Bildkontrast vorteilhaft und erleichtert die zuverlässige Detektion des phasenverschiebenden Defekts.

Weitere optionale Merkmale des Inspektionsverfahrens und die damit jeweils erzielten Wirkungen entsprechen den oben beschriebenen Merkmalen und Wirkungen. Dies gilt insbesondere (aber nicht nur) für die den Antrieb zum Bewegen des Retroreflektors betreffenden Merkmale und/oder für die die automatische Auswertung des wenigstens einen erfassten Bildes betreffenden Merkmale.

Nach einem weiteren Aspekt der Erfindung wird ein Herstellungsverfahren für eine optische Vorrichtung oder ein optisches System angegeben. Das Herstellungsverfahren weist auf: Ausführen des Inspektionsverfahren nach einem der vorhergehenden Ansprüche zum Prüfen eines transparenten Prüflings auf eine Defektfreiheit im Hinblick auf intensitätsändernde und/oder richtungsändernde Defekte. Das Herstellungsverfahren weist ferner auf: Herstellen der optischen Vorrichtung oder des optischen Systems, wobei der transparente Prüfling selektiv im Falle der Defektfreiheit zum Herstellen der optischen Vorrichtung oder des optischen Systems verwendet wird.

Dadurch kann das Inspektionsverfahren zur Vermeidung von Fehlern bei der Herstellung der optischen Vorrichtung oder des optischen Systems genutzt werden.

Nach einem weiteren Aspekt der Erfindung wird Inspektionssystem zum Prüfen eines transparenten Prüflings auf eine Defektfreiheit im Hinblick auf (beispielsweise intensitätsändernde und/oder richtungsändernde) Defekte angegeben. Das Inspektionssystem weist ein Beleuchtungssystem zum Bereitstellen einer Durchlicht-Hellfeld-Beleuchtung auf. Das Inspektionssystem weist eine Bilderfassungseinrichtung zum Erfassen wenigstens eines Bildes des transparenten Prüflings bei Beleuchtung des optischen Prüflings mit der Durchlicht-Hellfeld-Beleuchtung auf. Das Beleuchtungssystem weist eine Konditioniereinrichtung zum Bereitstellen eines auf den transparenten Prüfling einfallenden ersten Strahlenbündels auf und ist so eingerichtet, dass das erste Strahlenbündel von einer Oberflächengeometrie des transparenten Prüflings derart abhängt, dass nach Durchtritt durch den transparenten Prüfling ein zweites Strahlenbündel resultiert, welches im Falle der Defektfreiheit des transparenten Prüflings ein kollimiertes Strahlenbündel ist. Die Konditioniereinrichtung weist eine Kollimationsoptik auf. Die Konditioniereinrichtung weist ferner wenigstens eine der folgenden Komponenten aufweist, um das erste Strahlenbündel in Richtung des transparenten Prüflings zu lenken: einen Retroreflektor; und/oder einen räumlichen Lichtmodulator.

Durch das Inspektionssystem werden verschiedene Wirkungen und Vorteile erzielt. Das Inspektionssystem ermöglicht eine teilautomatisierte oder vollautomatisierte Prüfung des transparenten Prüflings auf die Defektfreiheit unter Verwendung einer Durchlicht-Hellfeld-Beleuchtung, mit der Defekte in zuverlässiger und robuster Weise sichtbar gemacht werden können. Das erfasste wenigstens eine Bild ist einfach rechnergestützt auswertbar. Durch die Konditioniereinrichtung wird erreicht, dass im Falle der Defektfreiheit ein von der Bilderfassungseinrichtung erfassbares zweites Strahlenbündel resultiert, welches im Falle der Defektfreiheit des transparenten Prüflings ein kollimiertes Strahlenbündel ist. Intensitätsändernde (beispielsweise absorbierende) und/oder richtungsändernde (beispielsweise brechende, streuende und/oder reflektierende) Defekte sind somit dadurch erkennbar, dass überprüft wird, ob das mit der Bilderfassungseinrichtung erfasste zweite Strahlenbündel ein kollimiertes Strahlenbündel ist. Hierzu kann beispielsweise überprüft werden, ob es ein Homogenitätskriterium über seinen Bündelquerschnitt erfüllt. Die Konditioniereinrichtung ist darüber hinaus so ausgestaltbar, dass sie ohne Adaption und/oder Steuerung der Konditioniereinrichtung das erste Strahlenbündel für unterschiedliche Oberflächengeometrien des transparenten Prüflings so erzeugen kann, dass das erste Strahlenbündel von der Oberflächengeometrie abhängt.

Nach einem weiteren Aspekt der Erfindung wird Inspektionssystem zum Prüfen eines transparenten Prüflings auf eine Defektfreiheit im Hinblick auf (beispielsweise intensitätsändernde und/oder richtungsändernde) Defekte angegeben. Das Inspektionssystem weist ein Beleuchtungssystem zum Bereitstellen einer Durchlicht-Hellfeld-Beleuchtung auf. Das Inspektionssystem weist eine Bilderfassungseinrichtung zum Erfassen wenigstens eines Bildes des transparenten Prüflings bei Beleuchtung des optischen Prüflings mit der Durchlicht-Hellfeld-Beleuchtung auf. Das Beleuchtungssystem weist eine Lichtquelle und eine Konditioniereinrichtung zum Bereitstellen eines auf den transparenten Prüfling einfallenden ersten Strahlenbündels auf. Die Konditioniereinrichtung weist eine Kollimationsoptik und einen Retroreflektor auf. Die Konditioniereinrichtung ist eingerichtet, von der Lichtquelle erzeugtes Licht nach Durchlaufen der Kollimationsoptik durch den transparenten Prüfling auf den Retroreflektor zu lenken, um mit einem vom Retroreflektor zurückgeworfenen ersten Strahlenbündel den transparenten Prüfling im Durchlicht zu beleuchten.

Durch das Inspektionssystem werden verschiedene Wirkungen und Vorteile erzielt. Das Inspektionssystem ermöglicht eine teilautomatisierte oder vollautomatisierte Prüfung des transparenten Prüflings auf die Defektfreiheit unter Verwendung einer Durchlicht-Hellfeld-Beleuchtung, mit der Defekte in zuverlässiger und robuster Weise sichtbar gemacht werden können. Das erfasste wenigstens eine Bild ist einfach rechnergestützt auswertbar. Die Konditioniereinrichtung nutzt die Brechung am transparenten Prüfling in Kombination mit der Retroreflexion am Retroreflektor, um das erste Strahlbündel so zu erzeugen, dass es von einer Oberflächengeometrie des transparenten Prüflings abhängig ist. Die Konditioniereinrichtung nutzt die Brechung am transparenten Prüfling in Kombination mit der Retroreflexion am Retroreflektor, um das erste Strahlbündel so zu erzeugen, dass nach Durchgang des ersten Strahlenbündels durch den transparenten Prüfling ein von der Bilderfassungseinrichtung erfassbares zweites Strahlenbündel resultiert, welches im Falle der Defektfreiheit des transparenten Prüflings ein kollimiertes Strahlenbündel ist. Intensitätsändernde (beispielsweise absorbierende) und/oder richtungsändernde (beispielsweise brechende, streuende und/oder reflektierende) Defekte sind somit dadurch erkennbar, dass überprüft wird, ob das mit der Bilderfassungseinrichtung erfasste zweite Strahlenbündel ein kollimiertes Strahlenbündel ist. Hierzu kann beispielsweise überprüft werden, ob es ein Homogenitätskriterium über seinen Bündelquerschnitt erfüllt. Die Konditioniereinrichtung ist so ausgestaltet, dass sie ohne Adaption und/oder Steuerung der Konditioniereinrichtung das erste Strahlenbündel für transparente Prüflinge erzeugen kann, die auch unterschiedliche Oberflächengeometrien aufweisen können, wobei das erste Strahlenbündel von der jeweiligen Oberflächengeometrie abhängt.

Das Inspektionssystem nach den genannten Aspekten der Erfindung kann zur Durchführung des Inspektionsverfahrens nach jedem der hier offenbarten Ausführungsbeispiele eingerichtet sein. Optionale Merkmale des Inspektionssystems und die damit jeweils erzielten Wirkungen entsprechen den unter Bezugnahme auf die Inspektionsverfahren offenbarten Merkmalen und Wirkungen.

Die nachfolgenden optionalen Merkmale und damit verbundenen Wirkungen sind für die Inspektionssysteme nach jedem der offenbarten Aspekte realisierbar:
Das Inspektionssystem kann zur Prüfung transparenter Prüflinge mit unterschiedlichen Oberflächengeometrien eingerichtet sein, ohne dass das Beleuchtungssystem abhängig von der jeweiligen Oberflächengeometrie adaptiert und/oder gesteuert werden muss.

Dadurch kann eine vielseitige Einsetzbarkeit des Inspektionssystems erreicht werden.

Die Konditioniereinrichtung kann einen Strahlteiler aufweisen, der eingerichtet ist, das von der Lichtquelle erzeugte Licht nach Durchlaufen der Kollimationsoptik auf den Retroreflektor zu lenken.

Dadurch kann das Beleuchtungssystem mit einer kompakten Ausgestaltung so bereitgestellt werden, dass die Defektfreiheit zuverlässig und robust erkennbar ist.

Der Strahlteiler kann eingerichtet sein, das zweite Strahlenbündel zur Bilderfassungseinrichtung zu transmittieren.

Dadurch kann ein Inspektionssystem, das das Beleuchtungssystem und die Bilderfassungseinrichtung aufweist, mit einer kompakten Ausgestaltung so bereitgestellt werden, dass die Defektfreiheit zuverlässig und robust erkennbar ist.

Das Inspektionssystem kann mehrerer Polarisationsfilter aufweisen, die eingerichtet und angeordnet sind, Störlichteffekte zu reduzieren oder zu eliminieren.

Dadurch können Störlichteffekten, die durch eine Reflexion an wenigstens einer Oberfläche des transparenten Prüflings entstehen könnten, reduziert oder eliminiert werden.

Die mehreren Polarisationsfilter können einen zwischen der Lichtquelle und dem Strahlteiler angeordneten ersten Polarisationsfilter, einen zwischen dem transparenten Prüfling und dem Retroreflektor angeordneten zweiten Polarisationsfilter und einen zwischen dem Strahlteiler und der Bilderfassungseinrichtung angeordneten dritten Polarisationsfilter aufweisen.

Dadurch können Störlichteffekten, die durch eine Reflexion an wenigstens einer Oberfläche des transparenten Prüflings entstehen könnten, reduziert oder eliminiert werden, während eine Detektion unterschiedlicher Defekttypen möglich bleibt, einschließlich einer Prüfung der Defektfreiheit im Hinblick auf intensitätsändernde und/oder richtungsändernde Defekte.

Eine dritte Polarisationsrichtung des dritten Polarisationsfilters kann relativ zu einer ersten Polarisationsrichtung des ersten Polarisationsfilters um 90° gedreht sein, so dass durch eine Reflexion an dem transparenten Prüfling verursachte Störlichteffekte reduziert oder eliminiert werden.

Dadurch können Störlichteffekten, die durch eine Reflexion an wenigstens einer Oberfläche des transparenten Prüflings entstehen könnten, reduziert oder eliminiert werden.

Eine zweite Polarisationsrichtung des zweiten Polarisationsfilters kann relativ zur ersten Polarisationsrichtung des ersten Polarisationsfilters um einen Winkel von wenigstens 10° bis maximal 80°, von wenigstens 20° bis maximal 70°, von wenigstens 30° bis maximal 60° oder von näherungsweise 45° gedreht sein.

Dadurch bleibt eine Prüfung der Defektfreiheit im Hinblick auf intensitätsändernde und/oder richtungsändernde Defekte bei noch ausreichend guter Intensität an der Bilderfassungseinrichtung möglich. Durch Reflexion an dem transparenten Prüfling verursachte Störlichteffekte werden reduziert oder eliminiert, indem die Kombination aus erstem, zweiten und dritten Polarisationsfilter verwendet wird.

Weitere optionale Merkmale des Inspektionssystems und die damit jeweils erreichten Wirkungen entsprechen den unter Bezugnahme auf die Verfahren beschriebenen Merkmale und Wirkungen.

Nach einem weiteren Aspekt der Erfindung wird ein Inspektionssystem zum Prüfen eines transparenten Prüflings auf polarisationsändernde Defekte bereitgestellt. Das Inspektionssystem weist ein Beleuchtungssystem zum Bereitstellen einer Durchlicht-Beleuchtung, eine Polarisationsfilteranordnung, die mehrere Polarisationsfilter aufweist, und eine Bilderfassungseinrichtung zum Erfassen wenigstens eines Bildes bei Beleuchtung des optischen Prüflings mit der Durchlicht-Beleuchtung auf. Das Beleuchtungssystem weist eine Kollimationsoptik und einen Retroreflektor auf und ist eingerichtet, ein von der Kollimationsoptik kollimiertes Auflicht-Strahlenbündel so auf den transparenten Prüfling zu lenken, dass es vom Retroreflektor nach Durchgang durch den transparenten Prüfling als ein erstes Strahlenbündel auf den transparenten Prüfling retroreflektiert wird, um die Durchlicht-Beleuchtung bereitzustellen. Die Polarisationsfilteranordnung ist eingerichtet, Strahlen eines zweiten Strahlenbündels, das nach einer Brechung des ersten Strahlenbündels an wenigstens einer Oberfläche des transparenten Prüflings resultiert, bei einer Propagation vom transparenten Prüfling in Richtung der Bilderfassungseinrichtung selektiv abhängig davon zu blockieren, ob durch einen polarisationsändernden Defekt des transparenten Prüflings eine Polarisationsänderung verursacht wurde.

Durch das Inspektionssystem werden verschiedene Wirkungen und Vorteile erzielt, die den unter Bezugnahme auf das Inspektionsverfahren zum Prüfen des transparenten Prüflings auf polarisationsändernde Defekte beschriebenen Vorteilen und Wirkungen entsprechen.

Optionale Merkmale des Inspektionssystems und die damit erzielten Wirkungen entsprechen den unter Bezugnahme auf das Inspektionsverfahren beschriebenen Merkmalen. Das Inspektionssystem kann zur Durchführung des Inspektionsverfahrens zum Prüfen des transparenten Prüflings auf polarisationsändernde Defekte eingerichtet sein.

Nach einem weiteren Aspekt der Erfindung wird ein Inspektionssystem zum Prüfen eines transparenten Prüflings auf phasenverschiebende Defekte angegeben. Das Inspektionssystem weist eine Bilderfassungseinrichtung zum Erfassen wenigstens eines Bildes bei Beleuchtung des transparenten Prüflings mit einer Durchlicht-Beleuchtung auf, wobei die Bilderfassungseinrichtung eine Abbildungsoptik aufweist. Das Inspektionssystem weist ein Beleuchtungssystem zum Bereitstellen einer Durchlicht-Beleuchtung auf. Das Beleuchtungssystem weist Folgendes auf: eine Lichtquelle, die zum Erzeugen kohärenten Lichts eingerichtet ist; eine Kollimationsoptik; einen ersten Polarisationsfilter; einen Strahlteiler, der eingerichtet ist, das kohärente Licht nach Durchlaufen des ersten Polarisationsfilters auf eine Achse der Abbildungsoptik einzukoppeln; eine Prismengruppe; und einen Retroreflektor. Das Beleuchtungssystem ist eingerichtet, ein Auflicht-Strahlenbündel, das nach Durchgang des von der Lichtquelle erzeugtem kohärenten Licht durch die Kollimationsoptik, den ersten Polarisationsfilter und die Prismengruppe resultiert, auf den transparenten Prüfling zu lenken und nach Durchgang durch den transparenten Prüfling durch den Retroreflektor auf den transparenten Prüfling zu retroreflektieren, um die Durchlicht-Beleuchtung bereitzustellen. Das Inspektionssystem weist einen zweiten Polarisationsfilter auf, der zwischen dem Strahlteiler und der Bilderfassungseinrichtung angeordnet ist. Das Beleuchtungssystem weist einen Antrieb auf, der eingerichtet ist, den Retroreflektor während einer Belichtungszeit zum Erfassen eines Bildes des wenigstens einen Bildes zu bewegen.

Durch das Inspektionssystem werden verschiedene Wirkungen und Vorteile erzielt, die den unter Bezugnahme auf das Inspektionsverfahren zum Prüfen des transparenten Prüflings auf phasenverschiebende Defekte beschriebenen Vorteilen und Wirkungen entsprechen.

Optionale Merkmale des Inspektionssystems und die damit erzielten Wirkungen entsprechen den unter Bezugnahme auf das Inspektionsverfahren beschriebenen Merkmalen. Das Inspektionssystem kann zur Durchführung des Inspektionsverfahrens zum Prüfen des transparenten Prüflings auf phasenverschiebende Defekte eingerichtet sein.

Ein Herstellungssystem zum Herstellen einer optischen Vorrichtung oder eines optischen Systems nach einem Aspekt der Erfindung weist das Inspektionssystem auf. Das Herstellungssystem kann optional eine Fertigungsanordnung zum Fertigen des transparenten Prüflings und/oder ein Montagesystem zum Montieren der optischen Vorrichtung oder des optischen Systems unter Verwendung des transparenten Prüflings aufweisen, wobei das Herstellungssystem oder das Montagesystem eingerichtet ist, den transparenten Prüfling selektiv nur im Falle der Defektfreiheit zu montieren.

Dadurch werden die im Zusammenhang mit dem Inspektionssystem offenbarten Wirkungen in einem Herstellungssystem genutzt.

Die Inspektionsverfahren und Inspektionssysteme stellen verschiedene technische Wirkungen und Vorteile bereit. Inspektionsverfahren und Inspektionssysteme ermöglichen eine Prüfung auf Defektfreiheit im Hinblick auf (beispielsweise intensitätsändernde und/oder richtungsändernde und/oder polarisationsändernde und/oder eine Phasenverschiebung hervorrufende) Defekte. Die Inspektionsverfahren und Inspektionssysteme sind auf Prüflinge mit unterschiedlichen Oberflächengeometrien anwendbar. Bei Ausführungsbeispielen, bei denen ein kollimiertes Strahlenbündel über den transparenten Prüfling auf einen Retroreflektor gelenkt wird, um eine auf die Oberflächengeometrie angepasste Durchlicht-Hellfeld-Beleuchtung bereitzustellen, muss das Beleuchtungssystem nicht abhängig von der Oberflächengeometrien adaptiert und/oder gesteuert werden, um die gewünschte Durchlicht-Hellfeld-Beleuchtung bereitzustellen. Bei Ausführungsbeispielen, bei denen der Retroreflektor bewegt wird, um eine Glättung zu bewirken, ist eine besonders zuverlässige und robuste Prüfung auf Defektfreiheit möglich.

### KURZBESCHREIBUNG DER FIGUREN

Ausführungsbeispiel der Erfindung werden unter Bezugnahme auf die Figuren beschrieben. In den Figuren bezeichnen ähnliche oder identische Bezugszeichen Elemente mit ähnlicher oder identischer Ausgestaltung und/oder Funktion.
Fig. 1 ist eine schematische Darstellung eines Inspektionssystems bei Defektfreiheit eines transparenten Prüflings.
Fig. 2 ist eine schematische Darstellung des Inspektionssystems bei Vorliegen eines intensitätsändernden und/oder richtungsändernden Defekts des transparenten Prüflings.
Fig. 3 ist eine schematische Darstellung des Inspektionssystems, wobei das Beleuchtungssystem einen Retroreflektor aufweist.
Fig. 4 ist eine schematische Darstellung des Inspektionssystems von Fig. 3, wobei Polarisationen schematisch dargestellt sind, um die Wirkung von Polarisationsfiltern des Inspektionssystems auf den transparenten Prüfling durchlaufende Strahlung zu erläutern.
Fig. 5 ist eine schematische Darstellung des Inspektionssystems von Fig. 3, um die Wirkung der Polarisationsfiltern des Inspektionssystems auf am transparenten Prüfling reflektierte Strahlung zu erläutern.
Fig. 6 ist eine schematische Darstellung des Inspektionssystems nach einem weiteren Ausführungsbeispiel, wobei das Inspektionssystem (jedenfalls auch) zum Prüfen auf Defektfreiheit im Hinblick auf polarisationsändernde Defekte eingerichtet ist.
Fig. 7 ist eine schematische Darstellung des Inspektionssystems nach einem weiteren Ausführungsbeispiel, wobei das Inspektionssystem (jedenfalls auch) zum Prüfen auf Defektfreiheit im Hinblick auf phasenverschiebende Defekte eingerichtet ist und wobei ein Beleuchtungssystem einen Retroreflektor aufweist.
Fig. 8 ist eine schematische Darstellung eines doppelbrechenden Prismas einer Prismengruppe des Inspektionssystems zur Erläuterung der Funktionsweise des Inspektionssystems von Fig. 7.
Fig. 9 ist eine schematische Darstellung einer Implementierung der Prismengruppe des Inspektionssystems zur Erläuterung der Funktionsweise des Inspektionssystems von Fig. 7.
Fig. 10 ist eine schematische Darstellung einer weiteren Implementierung der Prismengruppe des Inspektionssystems von Fig. 7 zur Erläuterung der Funktionsweise des Inspektionssystems.
Fig. 11 ist eine schematische Darstellung von Komponenten des Inspektionssystems von Fig. 7.
Fig. 12 ist eine schematische Detailansicht des Retroreflektors.
Fig. 13 ist eine schematische Darstellung eines Antriebs des Inspektionssystems zum Antreiben des Retroreflektors.
Fig. 14 zeigt eine Periodendauer einer Bewegung des Retroreflektors im Vergleich zu einer Belichtungszeit.
Fig. 15 ist eine schematische Darstellung des Inspektionssystems, wobei das Beleuchtungssystem einen räumlichen Lichtmodulator aufweist.
Fig. 16 ist ein Flussdiagramm eines Inspektionsverfahrens.
Fig. 17 ist eine schematische Darstellung eines Herstellungssystems zum Herstellen einer optischen Vorrichtung oder eines optischen Systems.
Fig. 18 ist ein Flussdiagramm eines Herstellungsverfahrens.
Fig. 19 ist eine schematische Darstellung zur Erläuterung einer Verwendung des Inspektionssystems.
Fig. 20 ist ein Flussdiagramm eines Inspektionsverfahrens.

### DETAILLIERTE BESCHREIBUNG VON AUSFÜHRUNGSBEISPIELEN

Ausführungsbeispiele der Erfindung werden unter Bezugnahme auf die Figuren beschrieben. In den Figuren bezeichnen ähnliche oder identische Bezugszeichen Elemente mit ähnlicher oder identischer Ausgestaltung und/oder Funktion.

Merkmale der Ausführungsbeispiele können miteinander kombiniert werden, sofern dies in der nachfolgenden Beschreibung nicht ausdrücklich ausgeschlossen ist.

Inspektionsverfahren und Inspektionssysteme ermöglichen eine Prüfung eines transparenten Prüflings auf Defektfreiheit im Hinblick auf (beispielsweise intensitätsändernde und/oder richtungsändernde und/oder polarisationsändernde und/oder eine Phasenverschiebung hervorrufende) Defekte. Dazu wird ein Beleuchtungssystem verwendet, das eingerichtet ist, ein von einer Oberflächengeometrie des transparenten Prüflings abhängendes erstes Strahlenbündel zu erzeugen, um eine Durchlicht-Hellfeld-Beleuchtung für den transparenten Prüfling bereitzustellen. Das Inspektionsverfahren und Inspektionssystem nutzt eine Lichtquelle, eine Kollimationsoptik und einen Retroreflektor und/oder räumlichen Lichtmodulator, um das erste Strahlenbündel zu erzeugen. Mit dem Inspektionsverfahren und Inspektionssystem wird eine Inspektion auf Defektfreiheit unter Verwendung von Licht ermöglicht.

Der Begriff "Licht" und "Strahlung", wie er hier verwendet wird, beinhaltet den sichtbaren Spektralbereich (380 nm bis 750 nm), kann jedoch auch Wellenlängen im Nah-Ultraviolett (beispielsweise von 10 nm bis 380 nm) und/oder Nah-Infrarot (beispielsweise von 750 nm bis 1500 nm) aufweisen.

Der Begriff "transparenter Prüfling" bezeichnet einen Prüfling, der bei planmäßiger Ausgestaltung (also bei Defektfreiheit) Licht in einem bestimmten Wellenlängenbereich durchlässt, wobei an Oberflächen des Prüflings eine Brechung nach dem Brechungsgesetz (Snell'sches Gesetz) erfolgt. Der transparente Prüfling kann ausgewählt sein aus einer Gruppe, die aufweist oder besteht aus: Linsen, Prismen, Scheiben. Der transparente Prüfling kann auch eine andere transparente Komponente zur Verwendung in einer optischen Vorrichtung oder einem optischen System sein.

Unter "Defektfreiheit im Hinblick auf intensitätsändernde und/oder richtungsändernde Defekte" wird eine Freiheit von Abweichungen vom Sollzustand des transparenten Prüflings verstanden, so dass der transparente Prüfling frei von intensitätsändernden Defekten und/oder richtungsändernden Defekten ist. Insbesondere können mit den Inspektionsverfahren und Inspektionssystemen eine Prüfung im Hinblick darauf durchgeführt werden, ob der transparente Prüfling frei von sowohl intensitätsändernden Defekten als auch richtungsändernden Defekten ist. Unter "Defektfreiheit" kann im Hinblick auf intensitätsändernde und/oder richtungsändernde Defekte somit beispielsweise die Abwesenheit von sowohl intensitätsändernden Defekten als auch richtungsändernden Defekten verstanden. Dies gilt in entsprechender Weise für andere Defekttypen (wie polarisationsändernde oder eine Phasenverschiebung hervorrufende Defekte).

Unter "intensitätsändernden Defekten" werden Abweichungen vom Sollzustand verstanden, die zu einer teilweisen oder vollständigen Reduzierung einer Intensität eines auf die entsprechende Abweichung einfallenden Lichtstrahls führen. Beispiele für intensitätsändernde Defekte beinhalten opake oder andere nicht-transparente Einschlüsse oder Fehlstellen im Prüfling und/oder andere lichtabsorbierende Fehlstellen.

Unter "richtungsändernden Defekten" werden Abweichungen vom Sollzustand verstanden, die zu einer Richtungsänderung eines auf die entsprechende Abweichung einfallenden Lichtstrahls führen. Beispiele für richtungsändernde Defekte beinhalten Einschlüsse oder andere Fehlstellen im Inneren des Prüflings, die zu Reflexion, Brechung und/oder Beugung führen.

Unter einer "Freiheit von polarisationsändernden Defekten" wird verstanden, dass der transparente Prüfling keinen Defekt aufweist, der zu einer Polarisationsänderung eines den Defekt passierenden Lichtstrahls führt.

Unter "polarisationsändernden Defekten" werden Abweichungen vom Sollzustand verstanden, die zu einer Polarisationsänderung eines den Defekt passierenden Lichtstrahls führen. Beispiele für polarisationsändernden Defekte beinhalten Einschlüsse oder andere Fehlstellen im Prüfling, deren dielektrische Eigenschaften eine Veränderung der Polarisationsrichtung hervorrufen.

Unter einer "Freiheit von phasenverschiebenden Defekten" wird verstanden, dass der transparente Prüfling keinen Defekt aufweist, der zu einer Phasenverschiebung eines den Defekt passierenden Lichtstrahls führt. Beispiele für phasenverschiebende Defekte beinhalten Fehlstellen und/oder Einschlüsse, die zu ortsabhängigen Veränderungen der dielektrischen Konstante im transparenten Prüfling führen.

Unter "phasenverschiebenden Defekten" werden Abweichungen vom Sollzustand verstanden, zu einer Phasenverschiebung eines den Defekt passierenden Lichtstrahls führt, beispielsweise zu einer Phasenverschiebung, die polarisationsrichtungsabhängig sein kann. Beispiele für phasenverschiebenden Defekte beinhalten Einschlüsse oder andere Fehlstellen im Prüfling, deren dielektrische Eigenschaften eine Veränderung der Phase des den Defekt passierenden Lichtstrahles hervorrufen, beispielsweise für eine von mehreren linearen oder zirkulären Polarisationsrichtungen.

Der Begriff "kollimiertes Strahlenbündel" beinhaltet ein Strahlenbündel von zueinander parallelen Strahlen. Eine Intensität (oder Energiedichte) kann über einen Bündelquerschnitt des kollimiertes Strahlenbündels (also in einer Ebene senkrecht zur Propagationsrichtung) im Wesentlichen homogen sein. Eine Abnahme der Energiedichte zum Rand des kollimierten Strahlenbündels hin ist möglich und kann beispielsweise durch Blendengrößen oder die Abmessungen von Komponenten des Inspektionssystems verursacht sein.

Der Begriff "kohärentes Licht" beinhaltet Licht, dessen Kohärenzlänge so lang ist, dass im Inspektionssystem Teilstrahlen, in die ein Lichtstrahl aufgeteilt werden, nach Durchlaufen des transparenten Prüflings, Retroreflexion am Retroreflektor und erneutem Durchlaufen des transparenten Prüflings miteinander interfieren können.

Unter einer "Kollimationsoptik" wird wenigstens eine Linse oder ein Linsensystem verstanden, die oder das eingerichtet ist, ein kollimiertes Strahlenbündel bereitzustellen. Die Kollimationsoptik kann eine Kollimationslinse aufweisen oder kann eine Kollimationslinse sein. Es ist möglich, aber nicht erforderlich, dass die Kollimationsoptik zusätzlich zu einer Linse oder einem Linsensystem weitere Komponenten aufweist, beispielsweise um ein kollimiertes Strahlenbündel mit einem größeren Bündelquerschnitt bereitzustellen.

Eine Beschreibung einer Anordnung von Komponenten dahingehend, dass eine Komponenten "zwischen" zwei weiteren Komponenten angeordnet ist, bezieht sich auf die Relativposition entlang einer Strahlrichtung. Dabei ist es möglich, aber nicht zwangsläufig erforderlich, dass die Komponente "unmittelbar" benachbart (im Sinne des Fehlens weiterer optischer Komponenten) zu den zwei weiteren Komponenten angeordnet ist.

Angaben von Polarisationsrichtungen und/oder Achsen von doppelbrechenden Materialien beziehen sich in fachüblicher Weise auf eine Polarisationsrichtung in einer Ebene senkrecht zur Propagationsrichtung. Angaben relativer Polarisationsrichtungen berücksichtigen somit etwaige Richtungsänderungen. Ein Relativwinkel zwischen einer ersten Polarisationsrichtung und einer davon verschiedenen weiteren Polarisationsrichtung bedeutet somit, dass ein von einem Polarisationsfilter mit der ersten Polarisationsrichtung linear polarisierter Strahl bei Auftreffen auf einen weiteren Polarisationsfilter, der die weitere Polarisationsrichtung aufweist, eine Polarisationsrichtung aufweist, die um den Relativwinkel relativ zur weiteren Polarisationsrichtung gedreht ist.

Die Inspektionsverfahren und Inspektionssysteme können eingerichtet sein, eine Inspektion gemäß ISO 10110-7 (5/Prüfung), beispielsweise wenigstens im Hinblick auf: (a) intensitätsändernde Defekte und richtungsändernde Defekte; und/oder (b) polarisationsändernde Defekte; und/oder (c) phasenverschiebende Defekte auszuführen. Es ist nicht ausgeschlossen, dass die Inspektionsverfahren und Inspektionssysteme zusätzlich auch eine Defektfreiheit im Hinblick auf andere mögliche Defekte prüfen können.

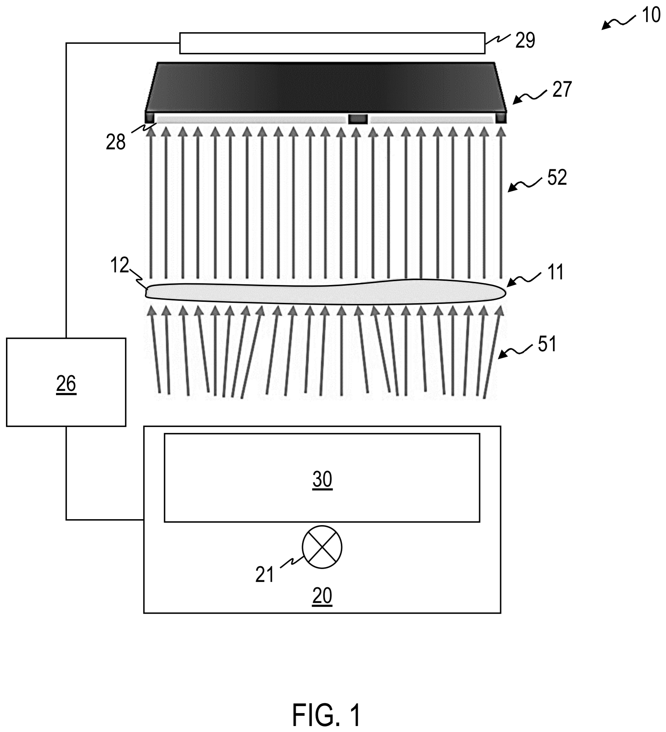

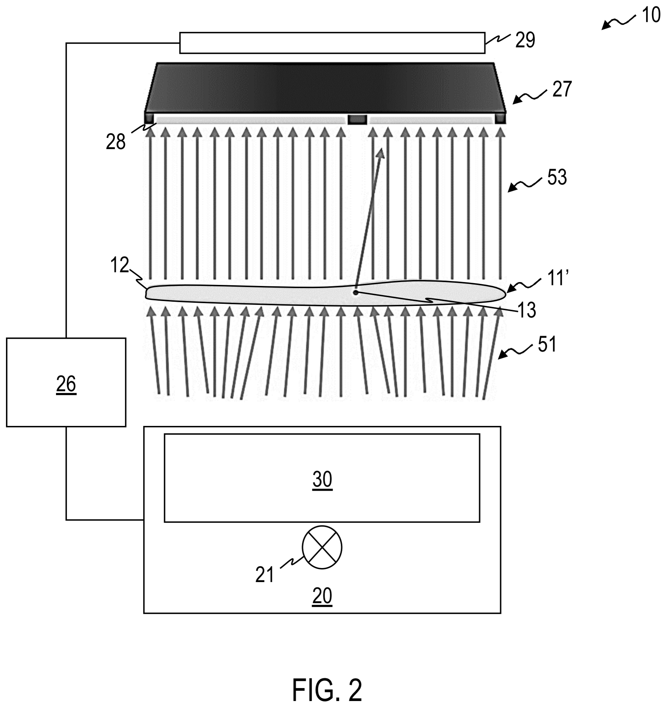

Fig. 1 und Fig. 2 zeigen schematische Darstellungen eines Inspektionssystems 10 zum Prüfen eines transparenten Prüflings 11. Das Inspektionssystem 10 ist eingerichtet, den transparenten Prüfling 11 auf Defektfreiheit im Hinblick auf intensitätsändernde und/oder richtungsändernde Defekte zu prüfen.

Das Inspektionssystem 10 weist ein Abbildungssystem auf, das eine Bilderfassungseinrichtung 27 aufweist. Die Bilderfassungseinrichtung 27 ist zum Erfassen eines Bildes des transparenten Prüflings 11 bei Durchlicht-Hellfeld-Beleuchtung eingerichtet. Die Bilderfassungseinrichtung 27 weist eine Abbildungsoptik 28 und einen Bildsensor 29 auf. Der Bildsensor 29 kann einen optoelektrischen Wandler aufweisen, beispielsweise einen CMOS- oder CCD-Chip.

Das Inspektionssystem 10 weist ein Beleuchtungssystem 20 zum Bereitstellen der Durchlicht-Hellfeld-Beleuchtung auf. Das Beleuchtungssystem 20 weist eine Lichtquelle 21 auf. Die Lichtquelle 21 kann eine Punktlichtquelle sein. Das Beleuchtungssystem 20 weist eine Konditioniereinrichtung 30 auf. Die Konditioniereinrichtung 30 weist eine Kollimationsoptik auf, wie noch ausführlicher beschrieben wird. Die Konditioniereinrichtung 30 ist eingerichtet, von der Lichtquelle 21 bereitgestelltes Licht zu konditionieren, um ein erstes Strahlenbündel 51 bereitzustellen, das für die Durchlicht-Hellfeld-Beleuchtung auf den transparenten Prüfling 11 einfällt. Die Konditioniereinrichtung 30 ist eingerichtet, das erste Strahlenbündel 51 so bereitzustellen, dass nach Durchgang durch den transparenten Prüfling 11 ein zweites Strahlenbündel resultiert, das ein kollimiertes Strahlenbündel von Parallelstrahlen 52 ist, falls der Prüfling 11 frei von (beispielsweise intensitätsändernden und/oder richtungsändernden) Defekten ist. Das kollimierte Strahlenbündel 52 kann über einen Bündelquerschnitt im Wesentlichen konstante Energiedichte aufweisen, also wenigstens im Wesentlichen homogen sein.

Fig. 2 zeigt die Funktionsweise des Inspektionssystems 10, falls der transparente Prüfling ein transparenter Prüfling 11' ist, der einen intensitätsändernden und/oder richtungsändernden Defekt 13 aufweist. Der Defekt 13 führt dazu, dass das zweite Strahlenbündel, das nach Durchtritt des ersten Strahlenbündels 51 durch den transparenten Prüfling 11' resultiert, kein homogenes Bündel von Parallelstrahlen mehr ist. Durch die Bilderfassungseinrichtung 27 ist dies Detektierbar.

Das von der Bilderfassungseinrichtung 27 erfasste Bild oder mehrere von der Bilderfassungseinrichtung 27 erfasste Bilder können rechnergestützt automatisch ausgewertet werden, beispielsweise durch eine Auswerteschaltung 26. Die Auswerteschaltung 26 kann auch Funktionen der Aktivierung der Lichtquelle und/oder einer Steuerung eines Antriebs des Beleuchtungssystems 20 ausführen.

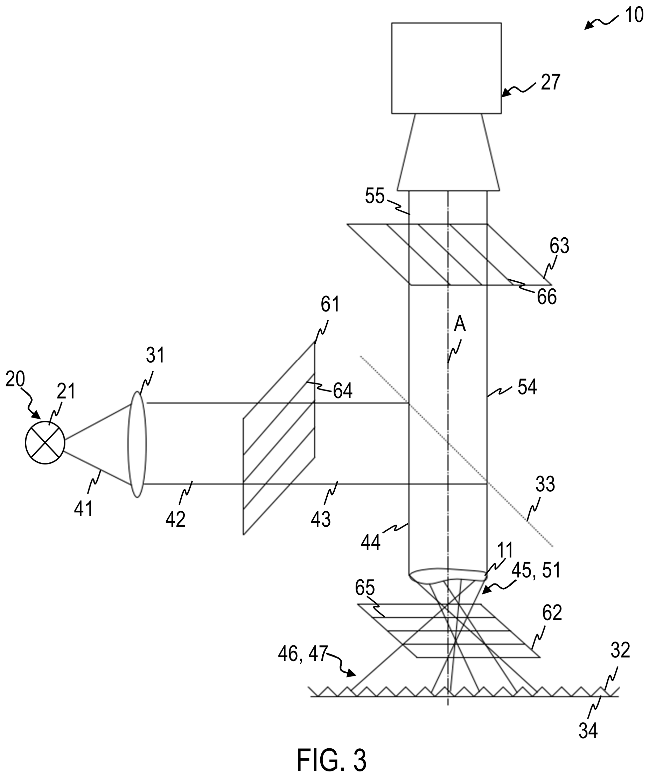

Das Beleuchtungssystem 20 ist eingerichtet, um das erste Strahlenbündel 51 so bereitzustellen, dass im Falle der Defektfreiheit des transparenten Prüflings 11 ein homogenes Strahlenbündel von Parallelstrahlen 52 resultiert. Das erste Strahlenbündel 51 muss hierfür von einer Oberflächengeometrie 12 des transparenten Prüflings 11 abhängig sein. Unter Bezugnahme auf Fig. 3 bis Fig. 14 wird eine Ausgestaltung des Inspektionssystems 10 erläutert, bei der das Inspektionssystem 10 nicht in Abhängigkeit von der Oberflächengeometrie 12 des transparenten Prüflings 11 adaptiert und/oder gesteuert werden muss, aber dennoch das erste Strahlenbündel 51 als abhängig von der Oberflächengeometrie 12 konditioniertes erstes Strahlenbündel 51 bereitstellen kann.

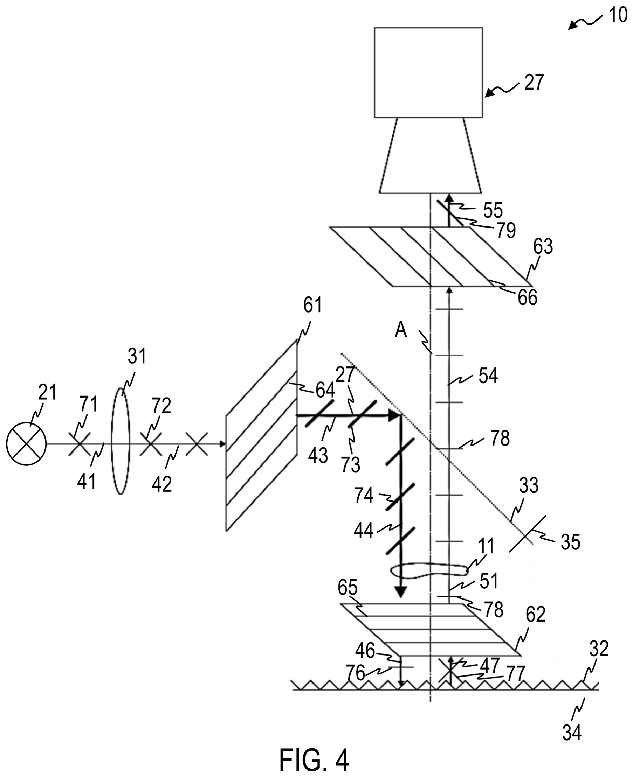

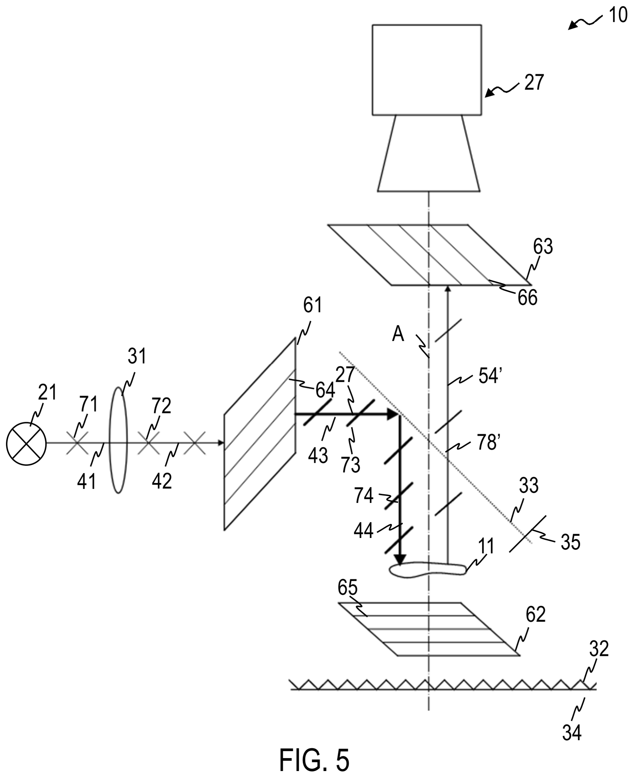

Fig. 3, Fig. 4 und Fig. 5 sind schematische Darstellungen des Inspektionssystems 10 nach einer Ausführungsform. Dabei wird anhand von Fig. 3 der allgemeine Aufbau und die allgemeine Funktionsweise im Hinblick auf die Konditionierung des ersten Strahlenbündels 51 beschrieben, während unter Bezugnahme auf Fig. 4 und Fig. 5 Merkmale zur Eliminierung und/oder Reduzierung von Störlichteffekten beschrieben werden.

Das Inspektionssystem 10 weist die Bilderfassungseinrichtung 27 und das Beleuchtungssystem 20 auf. Das Beleuchtungssystem 20 weist die Lichtquelle 21 und eine Konditioniereinrichtung zum Konditionieren des ersten Strahlenbündels 51 auf. Die Konditioniereinrichtung weist wenigstens eine Kollimationslinse 31, einen Retroreflektor 32 und einen Strahlteiler 33 auf. Das Beleuchtungssystem 20 ist im allgemeinen so eingerichtet, dass von der Lichtquelle 21 erzeugtes Licht 41 durch die Kollimationslinse 31 kollimiert wird, beispielsweise zu einem kollimierten Strahlenbündel 42, 43. Das kollimierte Strahlenbündel 42, 43 wird über einen Strahlteiler (oder eine andere Umlenkeinrichtung) so umgelenkt, dass es auf den transparenten Prüfling 11 einfällt. Nach Durchtritt durch den transparenten Prüfling 11 und Retroreflexion am Retroreflektor 32 resultiert das erste Strahlenbündel 51, mit dem der transparente Prüfling 11 in Durchlicht-Hellfeld-Beleuchtung durch die Bildaufnahmeeinrichtung 27 abgebildet wird.

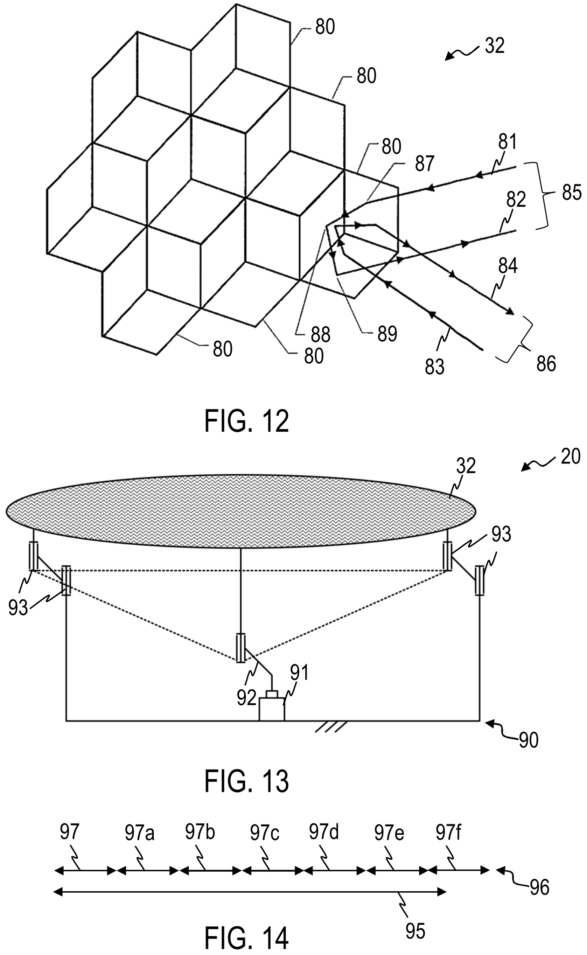

Der Retroreflektor 32 ist allgemein so eingerichtet, dass er einen darauf einfallenden Strahl wie folgt retroreflektiert:
- Die Strahlrichtung wird umgekehrt.
- Der Raumwinkel bleibt erhalten.
- Der Strahl kann nach Retroreflexion einen Achsversatz erhalten, der von der Ausgestaltung des Retroreflektors und dem konkreten Auftreffpunkt abhängt. Der Achsversatz ist im Allgemeinen klein. Ausgestaltungsmerkmale, die dem Achsversatz Rechnung tragen, werden unter Bezugnahme auf Fig. 12 und Fig. 13 noch näher beschrieben.

Der Retroreflektor 32 erstreckt sich entlang einer Retroreflektorebene 34. Die Retroreflektorebene 34 kann beispielsweise eine Basisebene des Retroreflektors 32 sein, auf der Tripelspiegel, Tripelprismen oder andere Bestandteile zum Herbeiführen der Retroreflexion angeordnet sind. Das Beleuchtungssystem 20 ist so ausgestaltet, dass die Retroreflektorebene 34 senkrecht zu einer Achse A der Bilderfassungseinrichtung 27 oder von deren Abbildungsoptik 28 steht.

Das Inspektionssystem 10 ist so ausgestaltet, dass die Achse A der Bilderfassungseinrichtung 27 den transparenten Prüfling 11 durchläuft. Das Inspektionssystem 10 kann so ausgestaltet sein, dass die Achse A den transparenten Prüfling 11 in einem Zentralbereich, insbesondere entlang eines Zentrums (beispielsweise entlang einer Achse eines als Linse ausgestalteten transparenten Prüflings 11) des transparenten Prüflings 11 durchläuft.

Das Inspektionssystem 10 kann so ausgestaltet sein, dass der Strahlteiler 33 in einem Winkel von 45° relativ zur Achse A der Bilderfassungseinrichtung 27 angeordnet ist. Der Strahlteiler 33 kann eine Normale 35 aufweisen (Fig. 4 und Fig. 5), die in einem Winkel von 45° zur Hauptachse A verkippt ist. Das Inspektionssystem 10 kann so ausgestaltet sein, dass der Strahlteiler 33 in einem Winkel von 45° relativ zu einer Strahlrichtung des die Kollimationsoptik verlassenden kollimierten Strahlenbündels 42 steht. Das Inspektionssystem 10 kann so ausgestaltet sein, dass die Achse A der Bilderfassungseinrichtung 27 in einem Winkel von 90° relativ zur Strahlrichtung des die Kollimationsoptik verlassenden kollimierten Strahlenbündels 42 steht.

Ein technischer Effekt des Inspektionssystems 10 besteht darin, dass eine Brechung an der Oberfläche des transparenten Prüflings 11 selbst in Kombination mit dem Retroreflektor 32 verwendet wird, um das von der Oberflächengeometrie des transparenten Prüflings 11 abhängige erste Strahlenbündel 51 zu erzeugen. Das Beleuchtungssystem 20 ist somit eingerichtet, um auf die jeweilige Oberflächengeometrie abgestimmte erste Strahlenbündel 51 für eine Vielzahl unterschiedlicher Prüflingsgeometrien bereitzustellen, ohne dass hierfür die Lichtquelle 21, die Kollimationsoptik 31, der Strahlteiler 33 und/oder der Retroreflektor 32 hinsichtlich ihrer Anordnung, Ausrichtung und/oder Funktionsweise an die jeweilige Prüflingsgeometrie angepasst werden müssen. Eine Anpassung ist somit nicht erforderlich, aber dennoch möglich, beispielsweise um einen Durchmesser des kollimierten Strahlenbündels 42 an einen Durchmesser des transparenten Prüflings 11 anzupassen.

Wie bereits unter Bezugnahme auf Fig. 1 und Fig. 2 beschrieben ist das erste Strahlenbündel 51, das als Durchlicht-Hellfeld-Beleuchtung auf den transparenten Prüfling 11 eingestrahlt wird, somit derart an den transparenten Prüfling 11 angepasst, dass ein zweites Strahlenbündel 54 entlang der Achse A zur Bilderfassungseinrichtung 27 propagiert, das im Falle von Defektfreiheit des Prüflings von intensitätsändernden und/oder richtungsändernden Defekten im Wesentlichen ein kollimiertes Strahlenbündel ist. Defekte führen zu Inhomogenitäten. Abweichungen von einem homogenen Bündel von Parallelstrahlen, die durch die Ausgestaltung des Retroreflektors 32 (beispielsweise durch die Tripelprismen) hervorgerufen werden können, können durch Glättung teilweise oder im Wesentlichen kompensiert werden, wie unter Bezugnahme auf Fig. 12 und Fig. 13 noch beschrieben wird.

Anhand des von der Bilderfassungseinrichtung 27 bei Durchlicht-Hellfeld-Beleuchtung des transparenten Prüflings erfassten Bildes kann ermittelt werden, ob der Prüfling frei von intensitätsändernden und richtungsändernden Defekten ist. Dazu kann das Bild rechnergestützt ausgewertet werden. Die rechnergestützte Auswertung kann die Ermittlung eines oder mehrerer Maße aufweisen, die beispielsweise eine Varianz, eine Standardabweichung, einen Homogenitätsindex, einen Kontrast, eine histogrammbasierte Auswertung und/oder eine GLCM ("Gray Level Co-Occurrence Matrix") aufweisen kann. Anhand eines Schwellenwertvergleichs kann auf die Anwesenheit oder Abwesenheit von intensitätsändernden und richtungsändernden Defekten geschlossen werden.

Das Inspektionssystem 10 ist somit eingerichtet, die Prüflingsgeometrie zur Strahlkonditionierung zu nutzen. Dies erfolgt durch das kollimierte Auflicht 44 in Kombination mit dem Retroreflektor 32.

Das Inspektionssystem 10 kann mehrere Polarisationsfilter aufweisen, um Störlichteffekte zu reduzieren oder zu eliminieren. Das Inspektionssystem 10 kann einen ersten Polarisationsfilter 61 aufweisen, der zwischen der Lichtquelle 21 und dem Strahlteiler 33 angeordnet ist. Das Inspektionssystem 10 kann einen zweiten Polarisationsfilter 62 aufweisen, der zwischen dem im Inspektionssystem 10 haltbaren transparenten Prüfling 11 und dem Retroreflektor 32 angeordnet ist. Das Inspektionssystem 10 kann einen dritten Polarisationsfilter 63 aufweisen, der zwischen dem Strahlteiler 33 und der Bilderfassungseinrichtung 27 angeordnet ist. Die Polarisationsfilter sind jeweils Linear-Polarisationsfilter. Der erste Polarisationsfilter 61 weist eine erste Polarisationsrichtung 64 auf. Der zweite Polarisationsfilter 62 weist eine zweite Polarisationsrichtung 65 auf. Der dritte Polarisationsfilter 63 weist eine dritte Polarisationsrichtung 66 auf.

Das Inspektionssystem 10 kann so ausgestaltet sein, dass die zweite Polarisationsrichtung 65 um 45° relativ zur ersten Polarisationsrichtung 64 gedreht ist. Wie bereits erwähnt, ist damit in fachüblicher Weise gemeint, dass unter Berücksichtigung der Strahlrichtungsänderung am Strahlteiler 33 das von dem ersten Polarisationsfilter 61 polarisierte Licht bei Auftreffen auf den zweiten Polarisationsfilter 62 eine Polarisationsrichtung (also Polarisationsebene) aufweist, zu der die zweite Polarisationsrichtung 65 des zweiten Polarisationsfilters 62 um 45° gedreht ist (wobei die Drehung relativ zur Achse A vorliegt, die parallel zur Propagationsrichtung des Auflichts 44 ist).

Das Inspektionssystem 10 kann so ausgestaltet sein, dass die dritte Polarisationsrichtung 66 um 90° relativ zur ersten Polarisationsrichtung 64 gedreht ist. Wie bereits erwähnt, ist damit in fachüblicher Weise gemeint, dass unter Berücksichtigung der Strahlrichtungsänderung am Strahlteiler 33 das von dem ersten Polarisationsfilter 61 polarisierte Licht nach Reflexion transparenten Prüfling 11 bei Auftreffen auf den dritten Polarisationsfilter 63 eine Polarisationsrichtung (also Polarisationsebene) aufweist, zu der die dritte Polarisationsrichtung 66 des dritten Polarisationsfilters 63 um 90° gedreht ist (wobei die Drehung relativ zur Achse A vorliegt).

Fig. 4 illustriert die Wirkung der Polarisationsfilter des Inspektionssystems 10. Die Lichtquelle 21 gibt Licht 41 eines begrenzten Wellenlängenspektrums ungerichtet ab. Das Licht 41 ist unpolarisiert, weist somit alle Polarisationsrichtungen 71 auf, oder ist anderweitig unbestimmt. Die Kollimationsoptik 31 erzeugt daraus ein kollimiertes Strahlenbündel 42. Der Polarisationszustand des Strahlenbündels 42 ist unpolarisiert, weist somit alle Polarisationsrichtungen 72 auf, oder ist anderweitig unbestimmt.

Der erste Polarisationsfilter 61 ist eingerichtet, das Strahlenbündel linear auf einen definierten Drehwinkel zu polarisiert. Der entsprechende Polarisationszustand 73 wird hier als Polarisationsrichtung von 0° festgelegt, d.h. Drehungen werden auf diese Polarisationsrichtung referenziert.

Das 0°-polarisierte Strahlenbündel 43 mit der Polarisationsrichtung 73 wird über den Strahlteiler 33 auf die Hauptachse A eingekoppelt und durchdringt als Auflicht 44 den Prüfling 11, ohne dabei die Polarisation zu ändern. Die Polarisation 74 des Auflichts 44 ist somit in Bezug auf ein Weltkoordinatensystem gleich der Polarisation 43. Die Brechung des Auflichts 44 am transparenten Prüfling 11 führt zu einem Strahlenbündel 45, dessen Polarisation ebenfalls gleich der Polarisation 44 ist.

Das 0°-polarisierte Strahlenbündel 45 wird durch den zweiten Polarisationsfilter 62 um 45° umpolarisiert. Vom zweiten Polarisationsfilter 62 zum Retroreflektor 32 weist das Strahlenbündel 46 somit eine relativ zur Polarisation 74 um 45° gedrehte Polarisation 76 auf.

Das 45°-polarisierte Strahlenbündel 46 trifft den Retroreflektor 32 und wird von diesem retroreflektiert. Technisch bedingt verändert die Reflexion auf dem Retroreflektor 32 abhängig von Ort und Beleuchtungsrichtung den Polarisationszustand des Lichts, so dass das retroreflektierte Licht 47 eine unbestimmte Polarisation 77 aufweist. Nach der Reflexion durchläuft das Strahlenbündel erneut den zweiten Polarisationsfilter 62 und wird durch diesen erneut linear auf 45° polarisiert, so dass es eine Polarisationsrichtung 78 aufweist.

Nach dem Durchtritt durch den transparenten Prüfling 11 und den Strahlteiler 33 wird das Licht 54 erneut um 45° umpolarisiert. Dies geschieht durch den dritten Polarisationsfilter 63. Die Polarisation 79 des Lichts 55 beträgt nun 90° im Bezug zur ursprünglichen Polarisation.

Eine Reduktion der Intensität, die durch die Umpolarisation bei Durchlaufen der Polfilter 31, 32, 33 bedingt ist, ist technisch unproblematisch. Durch Wahl einer Ausgangs-Lichtleistung der Lichtquelle 21, die eine gewünschte Intensität an der Bilderfassungseinrichtung 27 sicherstellt, kann erreicht werden, dass an der Bilderfassungseinrichtung 27 die gewünschte Intensität zur Verfügung steht.

Fig. 5 illustriert die Wirkung der Polarisationsfilter für Lichtanteile, die an einer objektivseitigen Oberfläche des transparenten Prüflings 11 oder an einer retroreflektorseitigen Oberfläche des transparenten Prüflings 11 reflektiert werden. Der ohne Auftreffen auf den Retroreflektor 32 am transparenten Prüfling 11 reflektierte Lichtanteil 54' weist eine Polarisation 78' auf, die gleich der Polarisation 74 ist. Die dritte Polarisationsrichtung 66 des dritten Retroreflektors 63 ist relativ hierzu um 90° gedreht. Der dritte Retroreflektor 63 blockiert somit den an der objektivseitigen Oberfläche des transparenten Prüflings 11 reflektierten Lichtanteil und den an der retroreflektorseitigen Oberfläche des transparenten Prüflings 11 reflektierten Lichtanteil. Störlichteffekte können so reduziert werden.

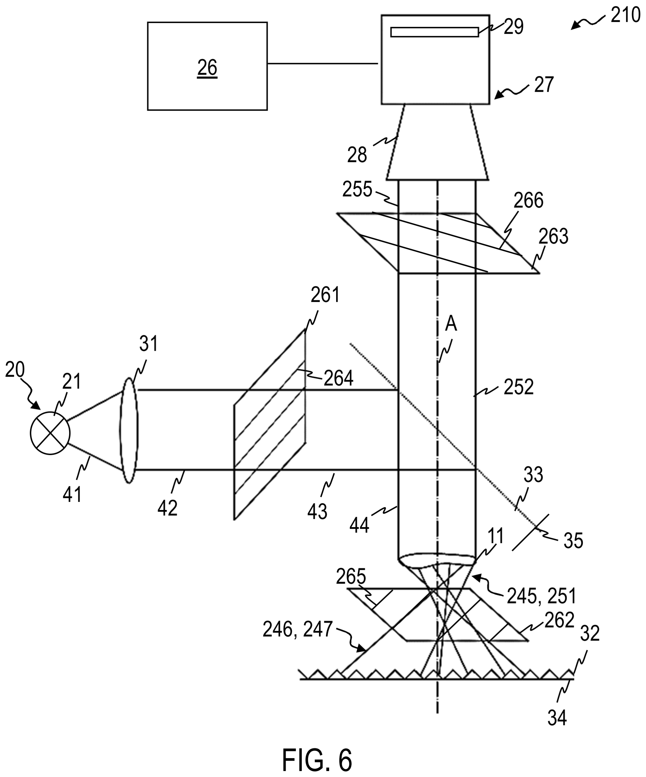

Fig. 6 ist eine schematische Darstellungen eines Inspektionssystems 210 nach einer weiteren Ausführungsform. Das Inspektionssystem 210 ist zur Prüfung auf Defektfreiheit im Hinblick auf polarisationsändernde Defekte eingerichtet. Komponenten, die im Hinblick auf Funktion und/oder Ausgestaltung Komponenten des Inspektionssystems 10 entsprechen, sind mit identischen oder ähnlichen Bezugszeichen bezeichnet.

Das Inspektionssystem ist für ein Inspektionsverfahren zum Prüfen eines transparenten Prüflings 11 auf polarisationsändernde Defekte eingerichtet. Dazu kann durch ein Beleuchtungssystem 20 des Inspektionssystems 210 eine Durchlicht-Beleuchtung 251 bereitgestellt und durch eine Bilderfassungseinrichtung 27 wenigstens ein Bild bei Beleuchtung des optischen Prüflings 11 mit der Durchlicht-Beleuchtung 251 erfasst werden.

Das Beleuchtungssystem 20 weist die Kollimationsoptik 31 und den Retroreflektor 32 auf und lenkt ein Auflicht-Strahlenbündel 44, das von der Kollimationsoptik 31 kollimiert wurde, auf den transparenten Prüfling 11, so dass es vom Retroreflektor 32 nach Durchgang durch den transparenten Prüfling 11 als ein erstes Strahlenbündel 251 auf den transparenten Prüfling 11 retroreflektiert wird, um die Durchlicht-Beleuchtung bereitzustellen.

Das Beleuchtungssystem 20 kann eingerichtet sein, einen von der Kollimationsoptik 31 bereitgestellten kollimierten Strahl als Auflicht-Strahlenbündel 44 auf den transparenten Prüfling 11 zu lenken, so dass die Lichtstrahlen 245, 246 des Auflicht-Strahlenbündels 44 nach Durchtritt durch den transparenten Prüfling 11 von dem Retroreflektor 32 retroreflektiert werden. Auf diese Weise wird das erste Strahlenbündel 251 mit retroreflektiertem Licht 247 bereitgestellt, das von dem Beleuchtungssystem 20 so konditioniert ist, dass es von einer Prüflingsgeometrie des transparenten Prüflings 11 abhängt. Das Beleuchtungssystem 20 weist eine Lichtquelle 21 auf. Die Lichtquelle 21 kann eine Punktlichtquelle sein. Die Kollimationsoptik 31 kollimiert das von der Lichtquelle 21 ausgegebene Licht 41, um ein kollimiertes Strahlenbündel 42, 43 zu erzeugen, das nach Einkopplung auf eine Achse A des Inspektionssystems 10 das Auflicht-Strahlenbündel 44 bildet. Das Auflicht-Strahlenbündel 44 kann über einen Strahlteiler 33 des Beleuchtungssystems 20 auf die Hauptachse A eingekoppelt werden.

Um die Prüfung auf Defektfreiheit im Hinblick auf polarisationsändernde Defekte auszuführen, weist das Inspektionssystem 210 eine Polarisationsfilteranordnung 261-263 auf. Die Polarisationsfilteranordnung 261-263 weist mehrere Polarisationsfilter auf. Die Polarisationsfilteranordnung 261-263 ist eingerichtet, Strahlen eines zweiten Strahlenbündels 252, das nach einer Brechung des ersten Strahlenbündels an wenigstens einer Oberfläche des transparenten Prüflings 11 resultiert, bei einer Propagation vom transparenten Prüfling 11 in Richtung der Bilderfassungseinrichtung 27 selektiv abhängig davon blockiert, ob durch einen polarisationsändernden Defekt des transparenten Prüflings 11 eine Polarisationsänderung verursacht wurde.

Das Beleuchtungssystem weist die Lichtquelle 21 auf, deren Licht 41 von der Kollimationsoptik 31 zum Bereitstellen des Auflicht-Strahlenbündels 44 kollimiert wird.

Die Polarisationsfilteranordnung 261-263 kann einen ersten Polarisationsfilter 261, einen zweiten Polarisationsfilter 262 und einen dritten Polarisationsfilter 263 aufweisen. Der erste Polarisationsfilter 261 ist entlang eines Strahlenwegs von der Lichtquelle 21 zum transparenten Prüfling 11 angeordnet. Der zweiten Polarisationsfilter 262 ist zwischen dem transparenten Prüfling 11 und dem Retroreflektor 32 angeordnet. Der dritten Polarisationsfilter 263 ist zwischen dem transparenten Prüfling 11 und der Bilderfassungseinrichtung 27 angeordnet.

Der erste Polarisationsfilter 261 weist eine erste Polarisationsrichtung 264 auf. Der zweite Polarisationsfilter 262 weist eine zweite Polarisationsrichtung 265 auf, die keine Drehung relativ zur ersten Polarisationsrichtung 264 aufweist. Wie bereits erwähnt, ist damit in fachüblicher Weise gemeint, dass unter Berücksichtigung der Strahlrichtungsänderung am Strahlteiler 33 das von dem ersten Polarisationsfilter 61 polarisierte Licht bei Auftreffen auf den zweiten Polarisationsfilter 62 eine Polarisationsrichtung (also Polarisationsebene) aufweist, die mit der zweiten Polarisationsrichtung 65 des zweiten Polarisationsfilters 62 zusammenfällt, also um 0° gedreht ist.

Der dritte Polarisationsfilter 263 weist eine dritte Polarisationsrichtung 266 auf, die relativ zur ersten Polarisationsrichtung 264 um 90° gedreht ist. Wie bereits erwähnt, ist damit in fachüblicher Weise gemeint, dass unter Berücksichtigung der Strahlrichtungsänderung am Strahlteiler 33 das von dem ersten Polarisationsfilter 261 polarisierte Licht nach Reflexion transparenten Prüfling 11 bei Auftreffen auf den dritten Polarisationsfilter 263 eine Polarisationsrichtung (beispielsweise Polarisationsebene) aufweist, zu der die dritte Polarisationsrichtung 266 des dritten Polarisationsfilters 263 um 90° gedreht ist (wobei die Drehung um die Achse A vorliegt).

Somit ist der zweiten Polarisationsfilter 262 eingerichtet, Licht mit einer durch den ersten Polarisationsfilter 261 festgelegten Polarisation durchzulassen. Der dritte Polarisationsfilter 263 ist eingerichtet, Licht 252 mit der durch den ersten Polarisationsfilter festgelegten Polarisation zu blockieren.

Die Bilderfassungseinrichtung 27 weist die Abbildungsoptik 28 auf, wobei das Auflicht-Strahlenbündel 44 entlang einer Achse A der Abbildungsoptik 28 auf den transparenten Prüfling 11 einfällt. Der transparente Prüfling 11 ist bei Durchführung des Inspektionsverfahrens an der Achse A positioniert. Das Auflicht-Strahlenbündel 44 wird über den Strahlteiler 33 auf die Achse A eingekoppelt. Das Inspektionssystem 210 ist so ausgestaltet, dass die Achse A der Bilderfassungseinrichtung 27 den transparenten Prüfling 11 durchläuft. Das Inspektionssystem 10 kann so ausgestaltet sein, dass die Achse A den transparenten Prüfling 11 in einem Zentralbereich, insbesondere entlang eines Zentrums (beispielsweise entlang einer Achse eines als Linse ausgestalteten transparenten Prüflings 11) des transparenten Prüflings 11 durchläuft.

Ein technischer Effekt des Inspektionssystems 210 besteht darin, dass eine Brechung an wenigstens einer Oberfläche des transparenten Prüflings 11 selbst (beispielsweise eine Brechung an zwei Hauptflächen des Prüflings) in Kombination mit dem Retroreflektor 32 verwendet wird, um das von der Oberflächengeometrie des transparenten Prüflings 11 abhängige erste Strahlenbündel 251 zu erzeugen. Das Beleuchtungssystem 20 ist somit eingerichtet, um auf die jeweilige Oberflächengeometrie abgestimmte erste Strahlenbündel 251 für eine Vielzahl unterschiedlicher Prüflingsgeometrien bereitzustellen, ohne dass hierfür die Lichtquelle 21, die Kollimationsoptik 31, der Strahlteiler 33 und/oder der Retroreflektor 32 hinsichtlich ihrer Anordnung, Ausrichtung und/oder Funktionsweise an die jeweilige Prüflingsgeometrie angepasst werden müssen. Eine Anpassung ist somit nicht erforderlich, aber dennoch möglich, beispielsweise um einen Durchmesser des kollimierten Strahlenbündels 42 an einen Durchmesser des transparenten Prüflings 11 anzupassen.

Das erste Strahlenbündel 251, das als Durchlicht-Beleuchtung auf den transparenten Prüfling 11 eingestrahlt wird, ist an den transparenten Prüfling 11 so angepasst, dass das zweite Strahlenbündel 252 entlang der Achse A zum dritten Strahlteiler 263 propagiert. Der dritte Strahlteiler 263 blockiert Lichtstrahlen, die im transparenten Prüfling keine Polarisationsänderung erfahren haben. Der dritte Strahlteiler 263 lässt Lichtstrahlen mit abgeschwächter Intensität passieren, die durch einen polarisationsändernden Defekt des transparenten Prüflings 11 eine Polarisationsänderung erfahren haben. Somit wird zuverlässige und einfach auswertbare (auch rechnergestützt automatisch auswertbare) Bildinformation erzielt, die die Anwesenheit von polarisationsändernden Defekten anzeigt. Abweichungen des zweiten Strahlenbündels 252 von einem homogenen Bündel von Parallelstrahlen, die durch die Ausgestaltung des Retroreflektors 32 (beispielsweise durch die Tripelprismen) hervorgerufen werden können, können durch Glättung teilweise oder im Wesentlichen kompensiert werden. Insbesondere kann hierzu das Inspektionssystem 210 einen Antrieb 90 zum Bewegen des Retroreflektors aufweisen. Der Antrieb 90 kann einen rotationsgesperrten Exzenterantrieb aufweisen, wie unter Bezugnahme auf Fig. 12, Fig. 13 und Fig. 14 noch beschrieben wird.

Nach dem Durchtritt durch den transparenten Prüfling 11 und den Strahlteiler 33 treffen die Lichtstrahlen des zweiten Strahlenbündels 252 auf den dritten Polarisationsfilter 263. Aufgrund der dritten Polarisationsrichtung 266, die senkrecht zur ersten Polarisationsrichtung steht (also um 90° zu dieser gedreht ist), lässt der dritte Polarisationsfilter 263 keine Strahlung passieren, falls der transparente Prüfling 11 frei von polarisationsändernden Defekten ist. Falls der transparente Prüfling 11 wenigstens einen polarisationsändernden Defekt aufweist, können Lichtstrahlen, deren Polarisation vom Defekt verändert wurde, den dritten Polarisationsfilter 263 passieren. Dabei kann es zu einer Verringerung der Intensität kommen. Der oder die vom dritten Polarisationsfilter 263 nicht blockierte(n) Lichtstrahle(n) 255, die durch den dritten Polarisationsfilter 263 auf eine Polarisation senkrecht zu ersten Polarisation umpolarisiert wurden, werden von der Bilderfassungseinrichtung 27 detektiert. Durch die Ausgestaltung des Inspektionssystems 210 ist sogar eine einfache Lokalisierung von polarisationsändernden Defekten in dem Sinne möglich, dass ihre Koordinaten quer zur Achse A bestimmbar sind.

Anhand des von der Bilderfassungseinrichtung 27 bei Durchlicht-Beleuchtung des transparenten Prüflings erfassten Bildes kann ermittelt werden, ob der Prüfling frei von polarisationsändernden Defekten ist. Dazu kann das Bild rechnergestützt ausgewertet werden. Die rechnergestützte Auswertung kann einen Schwellenwertvergleich von Pixelwerten, von unterschiedlichen Farbkanalwerten eines Pixels oder von aus mehreren Farbkanälen rechnerisch ermittelten Gesamtintensitäten am jeweiligen Pixel aufweisen. Anhand eines Schwellenwertvergleichs kann auf die Anwesenheit oder Abwesenheit von polarisationsändernden Defekten geschlossen werden.

Das Inspektionssystem 210 ist eingerichtet, die Prüflingsgeometrie zur Strahlkonditionierung zu nutzen. Dies erfolgt durch das kollimierte Auflicht 44 in Kombination mit dem Retroreflektor 32.

Die mehreren Polarisationsfilter 261, 262, 263 dienen nicht nur der Detektion polarisationsändernder Defekte im transparenten Prüfling, sondern bieten darüber hinaus die Wirkung, Störlichteffekte zu reduzieren oder zu eliminieren.

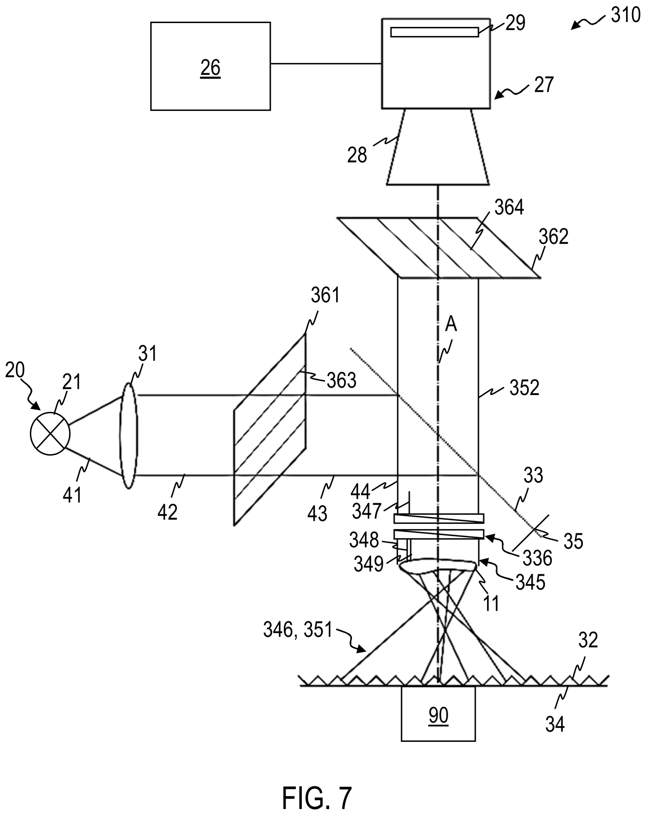

Fig. 7 ist eine schematische Darstellungen eines Inspektionssystems 310 nach einer weiteren Ausführungsform. Das Inspektionssystem 310 ist zur Prüfung auf Defektfreiheit im Hinblick auf phasenverschiebende Defekte eingerichtet.

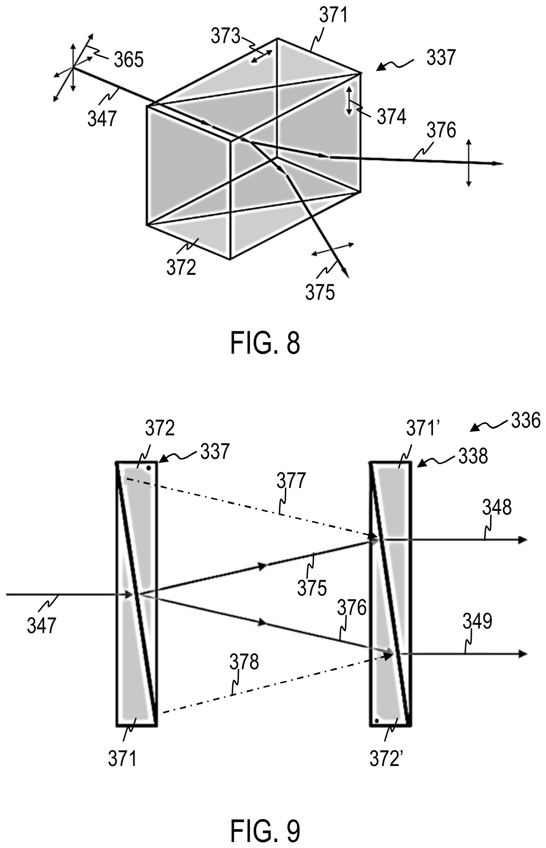

Fig. 7 ist eine schematische Darstellungen des Inspektionssystems 310 nach einer Ausführungsform. Dabei wird anhand von Fig. 7 der allgemeine Aufbau und die allgemeine Funktionsweise des Inspektionssystems beschrieben. Spezifische Merkmale einer Prismengruppe werden unter Bezugnahme auf Fig. 8, Fig. 9, Fig. 10 und Fig. 11 beschrieben.

Das Inspektionssystem 310 weist ein Abbildungssystem auf, das eine Bilderfassungseinrichtung 27 aufweist. Die Bilderfassungseinrichtung 27 ist zum Erfassen eines Bildes bei Durchlicht-Beleuchtung eines transparenten Prüflings 11 eingerichtet. Die Bilderfassungseinrichtung 27 weist eine Abbildungsoptik 28 und einen Bildsensor 29 auf. Der Bildsensor 29 kann einen optoelektrischen Wandler aufweisen, beispielsweise einen CMOS- oder CCD-Chip. Die Abbildungsoptik 28 kann eine geringe numerische Apertur (NA) aufweisen. Die Abbildungsoptik 28 kann ein telezentrisches Messobjektiv aufweisen. Die Abbildungsoptik 28 kann eine Achse A aufweisen, die beispielsweise die optische Achse der Abbildungsoptik 28 sein kann.

Das Inspektionssystem 310 weist ein Beleuchtungssystem 20 zum Bereitstellen der Durchlicht-Beleuchtung auf. Das Beleuchtungssystem 20 weist eine Lichtquelle 21 zum Bereitstellen von kohärentem Licht 41 auf. Die Lichtquelle 21 kann so eingerichtet sein, dass eine Kohärenzlänge des kohärenten Lichts 41 größer ist als ein optischer Weglängenunterschied von Teilstrahlen 348, 349, in die ein Strahl 347 eines Auflicht-Strahlenbündels 44 durch eine Prismengruppe 336 aufgeteilt wird.

Das Beleuchtungssystem 20 weist eine Kollimationsoptik 31, die Prismengruppe 336 und einen Retroreflektor 32 auf. Das Beleuchtungssystem 20 kann eingerichtet sein, einen von der Kollimationsoptik 31 bereitgestellten kollimierten Strahl 42, 43 über einen Strahlteiler 33 als auf die Achse A eingekoppeltes kollimiertes Strahlenbündel 44 auf die Prismengruppe 336 und von dort weiter als Auflicht-Strahlenbündel 45 auf den transparenten Prüfling 11 zu lenken. Das Beleuchtungssystem 20 kann somit eingerichtet sein, von der Lichtquelle 21 erzeugte kohärente Strahlung 41 über die Kollimationsoptik 31, einen ersten Polarisationsfilter 361 und die Prismengruppe 336 als das Auflicht-Strahlenbündel 45 auf den transparenten Prüfling 11 zu lenken, so dass von der Prismengruppe 336 erzeugte Teilstrahlen 348, 349 nach Durchtritt durch den transparenten Prüfling 11 von dem Retroreflektor 32 retroreflektiert werden.

Das Beleuchtungssystem 20 ist so eingerichtet, dass es ein erstes Strahlenbündel 351 als Durchlicht-Beleuchtung bereitstellt, das von einer Prüflingsgeometrie des transparenten Prüflings 11 abhängt. Das Beleuchtungssystem 20 ist durch die Verwendung der Kollimationsoptik 31 in Kombination mit der Prismengruppe 336 und dem Retroreflektor 32 so eingerichtet, dass:
- die Teilstrahlen 348, 349, in die ein Lichtstrahl des kollimierten Strahlenbündels 44 von der Prismengruppe 336 aufgeteilt werden, den transparenten Prüfling 11 entlang unterschiedlicher Lichtwege durchlaufen, so dass örtliche Variationen dielektrischer Eigenschaften des transparenten Prüflings zu einer Phasenverschiebung führen können;
- eine Brechung der Teilstrahlen 348, 349 im Auflicht-Strahlenbündel 345 an der Oberfläche des transparente Prüflings 11 zu einem Strahlenbündel 346 von nicht-parallelen Strahlen führt, die die an der Oberfläche des transparenten Prüflings 11 gebrochenen Teilstrahlen 348, 349 aufweisen und die am Retroreflektor 32 retroreflektiert und zum transparenten Prüfling 11 zurückgeworfen werden;

- die erneute Brechung an der Oberfläche des transparenten Prüflings 11 wiederum dazu führt, dass die Teilstrahlen als wenigstens annähernd parallele Teilstrahlen zur Prismengruppe 336 zurücklaufen (wobei ein Versatz am Retroreflektor durch einen Antrieb 90 zum Bewegen des Retroreflektor während einer Belichtungszeit glättbar ist, wie noch ausführlicher beschrieben wird); und
- die unterschiedlichen Wege der Teilstrahlen in Kombination mit der Kohärenz der von der Lichtquelle 21 erzeugten Strahlung 41 zu einer Interferenz führt, die von einer Phasenverschiebung der beiden Teilstrahlen zueinander abhängt.

Der Strahl kann nach Retroreflexion einen Achsversatz erhalten, der von der Ausgestaltung des Retroreflektors 32 und dem konkreten Auftreffpunkt abhängt. Der Achsversatz ist im Allgemeinen klein. Ausgestaltungsmerkmale, die dem Achsversatz Rechnung tragen, werden unter Bezugnahme auf Fig. 12, Fig. 13 und Fig. 14 noch näher beschrieben.

Der Retroreflektor 32 erstreckt sich entlang einer Retroreflektorebene 34. Die Retroreflektorebene 34 kann beispielsweise eine Basisebene des Retroreflektors 32 sein, auf der Tripelspiegel, Tripelprismen oder andere Bestandteile zum Herbeiführen der Retroreflexion angeordnet sind. Das Beleuchtungssystem 20 ist so ausgestaltet, dass die Retroreflektorebene 34 senkrecht zur Achse A der Abbildungsoptik 28 steht.

Das Beleuchtungssystem 20 weist einen Antrieb 90 zum Bewegen des Retroreflektors 32 während einer Belichtungszeit der Bilderfassungseinrichtung 27 auf. Der Antrieb 90 kann einen Exzenterantrieb aufweisen. Der Antrieb 90 kann eingerichtet sein, den Retroreflektor 32 parallel zur Retroreflektorebene 34 translatorisch zu bewegen. Der Antrieb 90 kann eingerichtet sein, den Retroreflektor 32 senkrecht zur Achse A translatorisch zu bewegen. Der Antrieb 90 kann eingerichtet sein, den Retroreflektor 32 während der Bilderfassungszeit zum Erfassen eines Bilds durch die Bildaufnahmeeinrichtung 27 über mehrere Bewegungszyklen translatorisch senkrecht zur Achse A zu bewegen.

Das Inspektionssystem 310 ist so ausgestaltet, dass die Achse A der Bilderfassungseinrichtung 27 den transparenten Prüfling 11 durchläuft. Das Inspektionssystem 310 kann so ausgestaltet sein, dass die Achse A den transparenten Prüfling 11 in einem Zentralbereich, insbesondere entlang eines Zentrums (beispielsweise entlang einer Achse eines als Linse ausgestalteten transparenten Prüflings 11) des transparenten Prüflings 11 durchläuft.

Das Inspektionssystem 310 kann so ausgestaltet sein, dass der Strahlteiler 33 in einem Winkel von 45° relativ zur Achse A der Abbildungsoptik 28 der Bilderfassungseinrichtung 27 angeordnet ist. Der Strahlteiler 33 kann eine Normale 35 aufweisen, die in einem Winkel von 45° zur Hauptachse A verkippt ist. Das Inspektionssystem 310 kann so ausgestaltet sein, dass der Strahlteiler 33 in einem Winkel von 45° relativ zu einer Strahlrichtung des die Kollimationsoptik verlassenden kollimierten Strahlenbündels 42 steht. Das Inspektionssystem 310 kann so ausgestaltet sein, dass die Achse A der Bilderfassungseinrichtung 27 in einem Winkel von 90° relativ zur Strahlrichtung des die Kollimationsoptik verlassenden kollimierten Strahlenbündels 42 steht.

Das Beleuchtungssystem 20 weist einen ersten Polarisationsfilter 361 auf. Der erste Polarisationsfilter 361 ist eingerichtet, das kollimierte Licht so zu polarisieren, dass jeder Lichtstrahl im kollimierten Strahlenbündel 44 von der Prismengruppe 336 jeweils in zwei parallele Teilstrahlen mit zueinander gleicher Polarisation und Intensität aufgespaltet wird. Der erste Polarisationsfilter 361 weist eine erste Polarisationsrichtung 363 auf. Die erste Polarisationsrichtung 363 des ersten Polarisationsfilters 361 ist so gerichtet, dass die auf die Prismengruppe 336 im kollimierten Strahlenbündel 44 einfallenden Lichtstrahlen jeweils in einem Winkel von 45° zu den beiden Richtungen polarisiert sind, für die Prismenteile der Prismengruppe 336 unterschiedliche Brechungsindizes bereitstellen. Die erste Polarisationsrichtung 363 kann somit - in fachüblicher Weise und unter Berücksichtigung der Strahlrichtungsänderung am Strahlteiler 33 - einen Winkel von 45° relativ zu den beiden Richtungen (in Fig. 8 als Richtungen 373, 374 dargestellt) aufweisen, die Polarisationsrichtungen entsprechen, für die von einem Prisma der Prismengruppe 336 unterschiedliche Brechungsindizes bereitgestellt werden.

Das Inspektionssystem 310 weist einen zweiten Polarisationsfilter 362 auf. Der zweite Polarisationsfilter 362 ist zwischen dem Strahlteiler 33 und der Bilderfassungseinrichtung 27 angeordnet. Der zweite Polarisationsfilter 362 ist angeordnet und eingerichtet, um als Analysator zu wirken. Der zweite Polarisationsfilter 362 weist eine zweite Polarisationsrichtung 364 auf. Die zweite Polarisationsrichtung 364 kann in einem Winkel von 135° relativ zu der Gitterrichtung der Prismengruppe verdreht sein, die als 0°-Winkel definiert ist. Die zweite Polarisationsrichtung 364 kann um 90° relativ zur ersten Polarisationsrichtung 362 verdreht sein, wobei in fachüblicher Weise Richtungsänderungen der Lichtstrahlen berücksichtigt werden. Der zweite Polarisationsfilter 362 kann als Analysator dienen.

Das Inspektionssystem 310 weist ein Steuersystem 26 auf. Das Steuersystem 26 ist eingerichtet, die Bilderfassungseinrichtung 27 (insbesondere eine Belichtungszeit der Bilderfassungseinrichtung 27) und/oder den Antrieb 90 zu steuern. Das Steuersystem 26 kann eingerichtet sein, eine Prismen-Antriebseinrichtung zu steuern, um eine Erfassung mehrerer Bilder bei unterschiedlichen Relativpositionen der Prismen der Prismengruppe 336 zu realisieren und die erfassten mehreren Bilder zu verrechnen, um die Prüfung auf phasenverändernde Defekte auszuführen.

Unter Bezugnahme auf Fig. 8, Fig. 9, Fig. 10 und Fig. 11 werden weitere Merkmale der Prismengruppe 336 des Inspektionssystems 310 erläutert.

Die Prismengruppe 336 weist mehrere Prismen auf, die jeweils doppelbrechende Prismen aufweisen können. Die Prismengruppe 336 weist ein erstes Prisma 337 und ein zweites Prisma 338 auf, die baugleich sein können. Das erste Prisma 337 weist einen ersten Prismenteil 371 auf, dessen Gitterstruktur so gerichtet ist, dass der erste Prismenteil für entlang einer Richtung 373 polarisiertes Licht einen ersten Brechungsindex (beispielsweise n₁) und für quer (beispielsweise senkrecht) zur Richtung 373 polarisiertes Licht einen zweiten Brechungsindex (beispielsweise n₂) aufweist. Das erste Prisma 337 weist einen zweiten Prismenteil 372 auf. Der zweite Prismenteil 372 kann eine im Vergleich zu einer Gitterstruktur des ersten Prismenteils 371 relativ zur Achse A (also in einem Koordinatensystem des Inspektionssystems 310) geänderte Gitterstruktur aufweisen, so dass der zweite Prismenteil 372 für entlang einer weiteren Richtung 374 polarisiertes Licht den ersten Brechungsindex (beispielsweise n1) und für quer (beispielsweise senkrecht) zur weiteren Richtung 374 polarisiertes Licht den zweiten Brechungsindex (beispielsweise n2) aufweist, wobei die weitere Richtung 374 nicht-parallel zur Richtung 373 ist.

Der erste Prismenteil 371 und der zweite Prismenteil 372 weisen jeweils eine keilförmige Schrägfläche auf und sind entlang der keilförmigen Schrägflächen beispielsweise über einen Klebstoff miteinander verbunden. Der erste Prismenteil 371 und der zweite Prismenteil 372 können so geformt sein, dass eine Außenoberfläche des ersten Prismas 337 quaderförmig ist und zur Richtung 373 und zur Richtung 374 parallele, planare Außenoberflächen aufweist. Diese Ausgestaltung führt dazu, dass das erste Prisma 337 einen senkrecht auf eine Außenoberfläche einfallenden Lichtstrahl 347, dessen Polarisation 365 um 45° zur Richtung 373 geneigt ist, in zwei intensitätsgleiche Zwischenstrahlen 375, 376 mit zueinander senkrecht gerichteter Polarisation aufteilt.

Fig. 9 zeigt eine Ausgestaltung der Prismengruppe 336. Die Prismengruppe weist das erste Prisma 337 und das zweite Prisma 338 auf, die beide wie unter Bezugnahme auf Fig. 8 beschrieben ausgestaltet sein können. Das erste Prisma 337 und das zweite Prisma 338 können baugleich sein. Das erste Prisma 337 und das zweite Prisma 338 sind in der Prismengruppe 336 so angeordnet, dass ihre größeren Außenoberflächen parallel zueinander und senkrecht zur Achse A gerichtet sind. Das erste Prisma 337 und das zweite Prisma 338 sind so ausgestaltet und in der Prismengruppe 336 so angeordnet, dass die optische Wirkung des ersten Prismas 337 und des zweiten Prismas gegenwirkend sind, um aus einem einfallenden Lichtstrahl 347 zwei Teilstrahlen 348, 349 mit gleicher Polarisation zu erzeugen.

Das erste Prisma 337 und das zweite Prisma 338 sind in der Prismengruppe 336 so angeordnet, dass der zweite Prismenteil 372 des ersten Prismas 337 und ein erster Prismenteil 372' des zweiten Prismas 338, die eine (in Bezug auf ein Welt-Koordinatensystem des Inspektionssystems) identische Ausrichtung der Gitterstruktur aufweisen, aufeinander zu weisend in der Prismengruppe 336 angeordnet sind. Das erste Prisma 337 und das zweite Prisma 338 sind in der Prismengruppe 336 so angeordnet, dass der ersten Prismenteil 371 des ersten Prismas 337 und ein zweiter Prismenteil 371' des zweiten Prismas 338, die eine identische Ausrichtung der Gitterstruktur aufweisen, voneinander weg weisend in der Prismengruppe 336 angeordnet sind. Durch eine derartige Anordnung wird eine Implementierung einer "gegenwirkenden" Anordnung der Prismen 337, 338 der Prismengruppe 336 bereitgestellt.

Die Prismengruppe 336 mit einer derartigen Ausgestaltung ist eingerichtet, um einen einfallenden Lichtstrahl 347 in zwei nicht-parallel zur Achse A verlaufende Zwischenstrahlen 375, 376 mit um 90° zueinander gedrehter Polarisationsrichtung aufzuteilen. Das zweite Prisma 338 ist eingerichtet, den Zwischenstrahl 375 mit einem aus einem benachbarten einfallenden Lichtstrahl erzeugten weiteren Zwischenstrahl 377 zu kombinieren, um einen Teilstrahl 348 zu erzeugen, der parallel zum einfallenden Lichtstrahl 347 des kollimierten Strahlenbündels 44 ist und eine selbe Polarisation aufweist wie der einfallende Lichtstrahl 347. Das zweite Prisma 338 ist eingerichtet, den Zwischenstrahl 376 mit einem aus einem benachbarten einfallenden Lichtstrahl erzeugten weiteren Zwischenstrahl 378 zu kombinieren, um einen weiteren Teilstrahl 348 zu erzeugen, der parallel zum einfallenden Lichtstrahl 347 des kollimierten Strahlenbündels 44 ist und dieselbe Polarisation aufweist wie der einfallende Lichtstrahl 347.

Beispielhaft wird die Funktionsweise der Prismengruppe für eine Polarisation des einfallenden Lichtstrahls von 45° (beispielsweise relativ zur Richtung 373 des ersten Prismenteils 371 des ersten Prismas 337) erläutert: Der Zwischenstrahl 375 und der weitere Zwischenstrahl 378 weisen dabei eine Polarisation von 0° (relativ zur Richtung 373) auf. Der Zwischenstrahl 376 und der weitere Zwischenstrahl 377 weisen eine Polarisation von 90° (relativ zur Richtung 373) auf. Durch die Wirkung des zweiten Prismas 338 der Prismengruppe 336 erfolgt eine Kombination zu zueinander versetzten Teilstrahlen 348, 349, die jeweils parallel zum einfallenden Lichtstrahl 347 sind und wiederum die Polarisation von 45° aufweisen.

Das erste Prisma 337 und das zweite Prisma 338 können jeweils sein: ein Wollaston-Prisma; ein Nomarski-Prisma; ein Rochon-Prisma; ein Senarmont-Prisma, ohne darauf beschränkt zu sein.

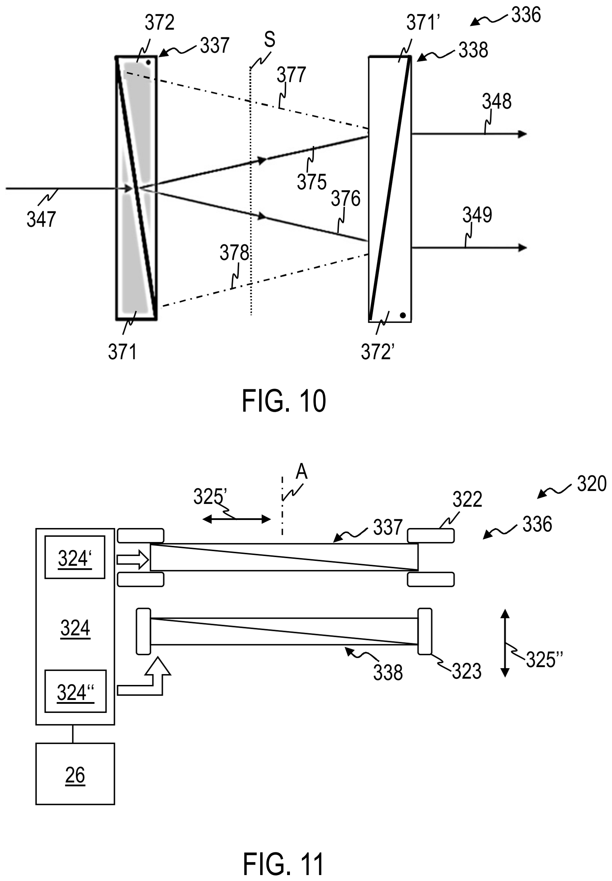

Fig. 10 zeigt eine weitere Implementierung einer gegenwirkenden Anordnung des ersten Prismas 337 und des zweiten Prismas 338 der Prismengruppe 336. Das erste Prisma 337 und das zweite Prisma 338 können baugleich sein. Außenoberflächen des ersten Prismas 337 und des zweiten Prismas 338 können parallel zueinander angeordnet sein. Ein erster Prismenteil 371 des ersten Prismas 337 und ein erster Prismenteil 371' des zweiten Prismas 338 weisen eine gleiche Ausrichtung ihrer Gitterstruktur auf. Ein zweiter Prismenteil 372 des ersten Prismas 337 und ein zweiter Prismenteil 372' des zweiten Prismas 338 weisen eine gleiche Ausrichtung ihrer Gitterstruktur auf. Der zweite Prismenteil 372 des ersten Prismas 337 und der erste Prismenteil 371' des zweiten Prismas 338 sind aufeinander zu weisend angeordnet (so dass sie unmittelbar nacheinander von dem kohärenten Licht durchlaufen werden). Der erste Prismenteil 371 des ersten Prismas 337 und der zweite Prismenteil 372' des zweiten Prismas 338 sind voneinander weg weisend angeordnet. Eine Keilfläche des erste Prismas 337 und eine Keilfläche des zweiten Prismas 338 sind nicht-parallel angeordnet. Die Keilfläche des ersten Prismas 337 und die Keilfläche des zweiten Prismas 338 können insbesondere spiegelsymmetrisch zu einer parallel zu den aufeinander zu weisenden Hauptflächen des ersten Prismas 337 und des zweiten Prismas 338 verlaufenden Symmetrieebene S angeordnet sein. Die Symmetrieebene S kann senkrecht zur Achse A stehen.

Auch die unter Bezugnahme auf Fig. 10 beschriebene weitere Implementierung der gegenwirkenden Anordnung des ersten Prismas 337 und des zweiten Prismas 338 der Prismengruppe 336 bewirkt die Aufteilung des einfallenden Lichtstrahls 347 in zwei zueinander parallele Teilstrahlen 348, 349.

Auch bei der weiteren Implementierung von Fig. 10 können das erste Prisma 337 und das zweite Prisma 338 jeweils sein: ein Wollaston-Prisma; ein Nomarski-Prisma; ein Rochon-Prisma; ein Senarmont-Prisma, ohne darauf beschränkt zu sein.

Während unter Bezugnahme auf Fig. 8, Fig. 9 und Fig. 10 die Wirkungsweise der Prismengruppe 336 für in Richtung des transparenten Prüflings 11 und des Retroreflektors 32 laufendes Licht beschrieben wurde, ist die Prismengruppe so eingerichtet, dass sie bei umgekehrter Propagationsrichtung vom transparenten Prüfling kommende Teilstrahlen kombiniert. Dabei kann es zu Interferenzeffekten kommen.

Wie anhand von Fig. 11 näher beschrieben wird, kann das Beleuchtungssystem 20 so eingerichtet sein, dass eine Relativposition des ersten Prismas 337 und des zweiten Prismas 338 gezielt verändert wird, um unterschiedliche Bilder zu erfassen. Das erste Prisma 337 und das zweite Prisma 338 können relativ zueinander beweglich gelagert sein. Dadurch kann beispielsweise ein Abstand zwischen den von der Prismengruppe erzeugten Teilstrahlen 348, 349 variiert und/oder eine relative Phasenlage zwischen den Teilstrahlen 348, 349 verändert werden.

Das Beleuchtungssystem 20 kann eine erste Führungseinrichtung 322 aufweisen, die eingerichtet ist, das erste Prisma 337 bei einer Bewegung entlang einer ersten Raumrichtung 325' zu führen. Das Beleuchtungssystem 20 kann eine zweite Führungseinrichtung 323 aufweisen, die eingerichtet ist, das zweite Prisma 338 bei einer Bewegung entlang einer zweiten Raumrichtung 325" zu führen. Die erste Raumrichtung 325' und die zweite Raumrichtung 325" können senkrecht zueinander sein. Die erste Führungseinrichtung 322 und die zweite Führungseinrichtung 323 sind so ausgestaltet und eingerichtet, dass die Parallelität der größeren Außenoberflächen des ersten Prismas 337 und des zweiten Prismas 338 bei einer Relativbewegung erhalten bleibt.

Die erste Führungseinrichtung 322 kann eingerichtet sein, das erste Prisma 337 bei einer Bewegung senkrecht zur Achse A zu führen. Die erste Führungseinrichtung 322 kann eingerichtet sein, das zweite Prisma 338 bei einer Bewegung parallel zur Achse A zu führen.

Das Beleuchtungssystem 20 kann eine Prismen-Antriebseinrichtung 324 aufweisen, die eingerichtet ist, das erste Prisma 337 und/oder das zweite Prisma 338 zu verstellen. Die Prismen-Antriebseinrichtung 324 kann einen ersten Antrieb 324' zum Verstellen des ersten Prismas 337 entlang der ersten Raumrichtung 325' (beispielsweise senkrecht zur Achse A) aufweisen. Die Prismen-Antriebseinrichtung 324 kann einen zweiten Antrieb 324" zum Verstellen des zweiten Prismas 338 entlang der zweiten Raumrichtung 325" (beispielsweise parallel zur Achse A) aufweisen. Die Prismen-Antriebseinrichtung 324 kann ein steuerbares Getriebe aufweisen, um eine Ausgangswelle eines Motors selektiv mit einem Verstellmechanismus für das erste Prisma 337 oder einem Verstellmechanismus für das zweite Prisma 338 zu koppeln.

Das Beleuchtungssystem 310 kann so eingerichtet sein, dass die Prismen-Antriebseinrichtung 324 unter Steuerung des Steuersystems 26 steuerbar ist. Dadurch kann eine Bewegung des ersten Prismas 337 und/oder des zweiten Prismas 338 entlang der ersten Raumrichtung 325' und/oder der zweiten Raumrichtung 325" in sicherer Weise und unter Kontrolle eines Steuersystems während der Prüfung ausgeführt werden. Dies ermöglicht eine systematische umfängliche Prüfung, die phasenverschiebende Defekte unterschiedlicher Größe und/oder Lage sicher detektieren kann. Alternativ oder zusätzlich wird die systematische Erfassung mehrerer Bilder bei unterschiedlichen Relativpositionen des ersten Prismas 337 und des zweiten Prismas 338 ermöglicht. Dies kann insbesondere vorteilhaft sein, wenn die mehreren Bilder rechnerisch weiterverarbeitet werden (beispielsweise durch Differenzbildbestimmung), um phasenverschiebende Defekte besonders zuverlässig und robust erkennen zu können.

Wie unter Bezugnahme auf Fig. 7 näher beschrieben wurde, ist das Beleuchtungssystem 20 so eingerichtet, dass das erste Strahlenbündel 351, das als Durchlicht-Beleuchtung auf den transparenten Prüfling 11 eingestrahlt wird, derart an den transparenten Prüfling 11 angepasst ist, dass ein zweites Strahlenbündel 352, das nach erneutem Durchgang durch den transparenten Prüfling 11 resultiert, ein weiteres Bündel von Parallelstrahlen aufweist.

Im Kontext von Inspektionsverfahren und Inspektionssystem zum Prüfen auf phasenverschiebende Defekte kann eine gegenwirkende Anordnung zweier Prismen genutzt werden. Eine "gegenwirkende Anordnung" zweier Prismen bezieht sich auf eine Anordnung, bei der ein erstes Prisma und ein zweites Prisma so angeordnet sind, dass das zweite Prisma entgegen der optischen Wirkung des ersten Prismas ausgerichtet ist. Bei Verwendung zweier baugleicher Prismen werden durch diese Anordnung zwei parallele Teilstrahlen erzeugt. Eine "gegenwirkende Anordnung" kann beispielsweise wie folgt implementiert werden:
- Das erste Prisma und das zweite Prisma weisen eine gleiche Reihenfolge der Orientierungen der Gitterstruktur für die jeweiligen Prismenteile entlang einer Strahlrichtung auf (beispielsweise: erstes Prisma: vertikal - horizontal; und zweites Prisma: vertikal - horizontal). Gleichzeitig ist die Orientierung von Keilflächen des ersten Prismas und des zweiten Prismas entgegengesetzt (nicht parallel).
- Das erste Prisma und das zweite Prisma weisen eine entgegengesetzte Reihenfolge der Orientierungen der Gitterstruktur für die jeweiligen Prismenteile entlang der Strahlrichtung auf (beispielsweise: erstes Prisma: vertikal - horizontal; und zweites Prisma: horizontal - vertikal). Gleichzeitig ist die Orientierung der Keilflächen des ersten Prismas und des zweiten Prismas gleichgerichtet (parallel).

Der Begriff der "gegenwirkende Anordnung" steht im Unterschied zu einer "gleichwirkenden Anordnung", bei der ein erstes Prisma und ein zweites Prisma so angeordnet sind, dass das zweite Prisma gleich der optischen Wirkung des ersten Prismas ausgerichtet ist. Eine "gleichwirkende Anordnung" kann wie folgt beschrieben werden:
- Das erste Prisma und das zweite Prisma weisen die gleiche Reihenfolge der Orientierungen der Gitterstruktur für die jeweiligen Prismenteile entlang der Strahlrichtung auf (beispielsweise: erstes Prisma: vertikal - horizontal; und zweites Prisma: vertikal - horizontal). Gleichzeitig ist die Orientierung der Keilflächen des ersten Prismas und des zweiten Prismas gleichgerichtet (parallel).
- Das erste Prisma und das zweite Prisma weisen eine entgegengesetzte Reihenfolge der Orientierungen der Gitterstruktur für die jeweiligen Prismenteile entlang der Strahlrichtung auf (beispielsweise: erstes Prisma: vertikal - horizontal; und zweites Prisma: horizontal - vertikal). Gleichzeitig ist die Orientierung der Keilflächen des ersten Prismas und des zweiten Prismas entgegengesetzt (nicht parallel).

Der Begriff "Teilstrahlen", wie er hier verwendet wird, bezieht sich auf wenigstens zwei zueinander parallele Strahlen, in die ein im Inspektionssystem auf die Prismengruppe einfallender Lichtstrahl aufgeteilt wird und/oder die von der Prismengruppe wieder kombiniert werden, nachdem sie den transparenten Prüfling durchlaufen haben, an einem Retroreflektor reflektiert wurden und den transparenten Prüfling ein zweites Mal durchlaufen haben.

Fig. 12 zeigt schematisch eine Ausgestaltung des Retroreflektors 32, wenn diese Tripelspiegel 80 oder Tripelprismen 80 aufweist. Die Ausgestaltung des Retroreflektors 32 führt dazu, dass einfallende Strahlen 81, 83 zwar mit gegenläufiger Richtung 82, 84 retroreflektiert werden, es dazu jedoch zu einem Versatz 85, 86 senkrecht zur Strahlrichtung kommt. Der Versatz 85, 86 ist abhängig von der Strahlrichtung und dem Auftreffpunkt 87 und/oder den Reflexionspunkten 87, 88, 89 an den Tripelspiegeln 80 oder Tripelprismen 80. Die Magnitude des Versatzes 85, 86 ist bedingt durch die Kantenlängen der Tripelspiegel 80 oder Tripelprismen 80 und kann somit verringert werden, indem ein Retroreflektor mit entsprechend kleiner Kantenlänge der Tripelspiegel 80 oder Tripelprismen 80 gewählt wird.

Alternativ oder zusätzlich kann das Inspektionssystem 10 eingerichtet sein, eine Glättung über mögliche Versätze 85, 86 bereitzustellen. Dazu kann das Inspektionssystem 10 einen Antrieb zum Bewegen des Retroreflektors 32 aufweisen. Der Antrieb kann den Retroreflektor 32 während einer Belichtungszeit (also während einer Zeitdauer, in der der Sensor 29 einfallende Intensität pixelweise aufintegriert) bewegen. Der Antrieb kann den Retroreflektor 32 parallel zur Retroreflektorebene 34 und/oder senkrecht zur Hauptachse A bewegen. Es hat sich als vorteilhaft herausgestellt, wenn der Antrieb den Retroreflektor 32 senkrecht zur Hauptachse A translatorisch in zwei Dimensionen (also in beiden Raumrichtungen parallel zur Retroreflektorebene 34) bewegt. Es hat sich dabei als vorteilhaft herausgestellt, wenn der Antrieb den Retroreflektor 32 periodisch bewegt, wobei ein Quotient aus Belichtungszeit und Periodendauer der Bewegung wenigstens gleich drei, wenigstens gleich vier oder wenigstens gleich fünf ist.

Fig. 13 ist eine schematische Darstellung eines Antriebs 90 des Beleuchtungssystems 20. Der Antrieb 90 kann als rotationsgesperrter Exzenterantrieb ausgestaltet sein. Der Antrieb 90 kann einen Motor 91 aufweisen, dessen Ausgangswelle mit einer Antriebskurbel 92 wirkverbunden ist, um eine Exzenterbewegung hervorzurufen. Der Antrieb 90 kann mehrere Rotationssperren 93 aufweisen, um eine rotationsgesperrte Exzenterbewegung hervorzurufen.

Fig. 14 veranschaulicht eine Ausgestaltung des Inspektionssystems im Hinblick auf die Wirkungsweise des Antriebs 90. Der Antrieb 90 führt während der Belichtungszeit 95 zum Erfassen eines Bildes (also genau eines Bildes) mehrere Bewegungszyklen 96 des Retroreflektors aus. Jeder der Bewegungszyklen 96 kann eine Periodendauer 97, 97a-f aufweisen, die jeweils gleich sein kann. Es ist möglich, aber nicht zwangsläufig erforderlich, dass die Belichtungszeit 95 ein ganzzahliges Vielfaches der Periodendauer 97 ist. Der Quotient aus der Belichtungszeit 95 und der Periodendauer 97 der Bewegung ist vorteilhaft wenigstens gleich drei, wenigstens gleich vier oder wenigstens gleich fünf.

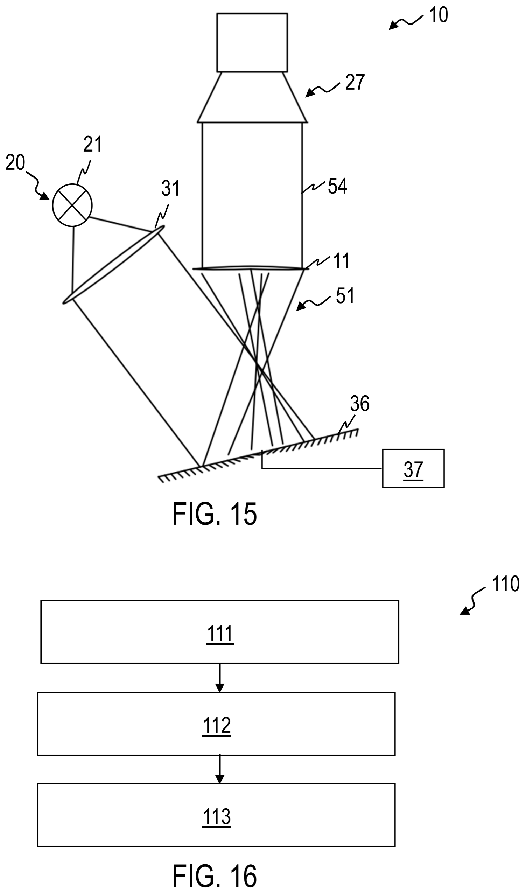

Fig. 15 zeigt eine weitere Ausführungsform des Inspektionssystem 10. Das Inspektionssystem 10 weist das Beleuchtungssystem 20 und die Bilderfassungseinrichtung 27 auf. Das Beleuchtungssystem 10 weist die Lichtquelle 21, die Kollimationsoptik mit wenigstens einer Kollimationslinse 31 und einen räumlichen Lichtmodulator 36 auf. Der räumliche Lichtmodulator 36 wird von einer Steuerung 37 abhängig von der Oberflächengeometrie des transparenten Prüflings 11 gesteuert, um das erste Strahlenbündel 51 zu erzeugen, das von der Oberflächengeometrie des transparenten Prüflings 11 abhängt. Auf diese Weise kann die Prüfung auf Defektfreiheit ebenfalls mit Durchlicht-Hellfeld-Beleuchtung erfolgen.

Fig. 16 ist ein Flussdiagramm eines Inspektionsverfahrens 110. Das Inspektionsverfahren 110 kann von oder mit dem Inspektionssystem 10, von oder mit dem Inspektionssystem 210 und/oder von oder mit dem Inspektionssystem 310 automatisch ausgeführt werden.

Bei 111 wird das von der Oberflächengeometrie 12 des transparenten Prüflings 11 abhängige erste Strahlenbündel mit einer Konditioniereinrichtung eines Beleuchtungssystems des Inspektionssystem 10 erzeigt. Die Konditioniereinrichtung weist eine Kollimationsoptik mit wenigstens einer Kollimationslinse 31 sowie einen Retroreflektor 32 oder einen räumlichen Lichtmodulator 36 auf. Das Erzeugen des ersten Strahlenbündels kann ein Bereitstellen von kollimiertem Auflicht aufweisen, das auf den transparenten Prüfling 11 eingestrahlt und nach Durchtritt durch den transparenten Prüfling 11 am Retroreflektor 32 reflektiert wird.

Bei 112 wird mit der Bilderfassungseinrichtung 27 ein Bild des transparenten Prüflings 11 erfasst. Die Bilderfassung 27 kann über eine Belichtungszeit andauern, in der der Retroreflektor 32 bewegt wird, beispielsweise unter Einfluss eines Exzenterantriebs, z.B. eines rotationsgesperrten Exzenterantriebs.

Bei 113 wird das erfasste Bild ausgewertet. Die Auswertung kann einen Schwellenwertvergleich eines Homogenitätsmaßes aufweisen. Die Auswertung kann automatisch rechnergestützt erfolgen.

Mit dem Inspektionsverfahren kann das Risiko der Verwendung fehlerbehafteter optischer Komponenten in einer optischen Vorrichtung oder einem optischen System reduziert werden.

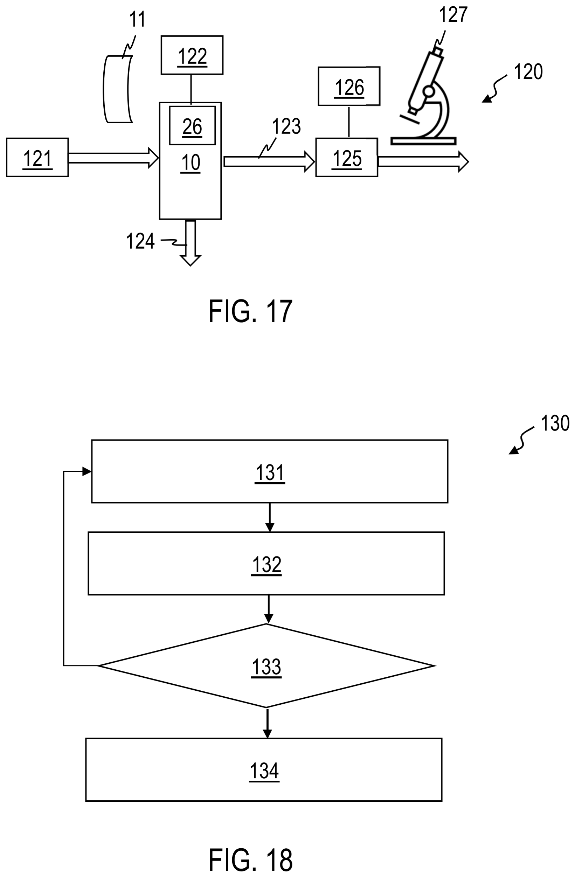

Fig. 17 ist eine schematische Darstellung eines Herstellungssystems 120 zum Herstellen einer optischen Vorrichtung 127 oder eines optischen Systems 127. Die optische Vorrichtung 127 oder das optische System 127 kann ein oder mehrere Linsen, Prismen und/oder andere transparente optische Bauteile aufweisen.

Das Herstellungssystem 120 weist das Inspektionssystem 10, 210 oder 310 auf. Das Inspektionssystem 10, 210 oder 310 ist zur Inspektion eines transparenten Prüflings 11 eingerichtet, der von einer Fertigungsanordnung 121 zum Fertigen des transparenten Prüflings 11 gefertigt wird. Abhängig von einem Resultat der Prüfung auf Defektfreiheit kann das Inspektionssystem 10, 210 oder 310 automatisch eine Schnittstelle 122 ansteuern. Die Schnittstelle 122 kann eine Mensch-Maschine-Schnittstelle und/oder eine Datenschnittstelle aufweisen. Das Inspektionssystem 10, 210 oder 310 kann die Mensch-Maschine-Schnittstelle und/oder die Datenschnittstelle in Abhängigkeit von dem Inspektionsergebnis ansteuern. Alternativ oder zusätzlich kann das Inspektionssystem 10, 210 oder 310 veranlassen, dass nur im Falle der Defektfreiheit eine Bereitstellung 123 des transparenten Prüflings 11 an ein Montagesystem 125 zum Montieren der optischen Vorrichtung 127 oder des optischen Systems 127 unter Verwendung des transparenten Prüflings erfolgt. Im Falle der Detektion eines Defekts kann ein Ausscheiden 124 des transparenten Prüflings 11 durch das Herstellungssystem 120 veranlasst werden.

Das Montagesystem 125 kann den transparenten Prüfling 11, dessen Defektfreiheit durch das Inspektionssystem 10, 210 oder 310 ermittelt wurde, in der optischen Vorrichtung 127 oder dem optischen System 127 montieren. Das Montagesystem 125 kann dabei vollautomatisch oder teilautomatisch arbeiten, wobei die Funktion des Montagesystems 125 von einer Steuerung 126 gesteuert werden kann.

Das Herstellungssystem 120 ist so eingerichtet, dass das Inspektionssystem aufgrund seiner Eigenschaften zur Prüfung mehrerer transparenter Komponenten der optischen Vorrichtung 127 oder des optischen Systems 127 einsetzbar ist, auch wenn sich diese Komponenten hinsichtlich ihrer Oberflächengeometrie unterscheiden.

Fig. 18 ist ein Flussdiagramm eines Herstellungsverfahrens 130. Das Herstellungsverfahren 130 kann von oder mit dem Herstellungssystem 120 automatisch ausgeführt werden.

Bei 131 wird ein transparenter Prüfling empfangen, der auf Defektfreiheit zu prüfen ist.

Bei 132 erfolgt die Prüfung auf Defektfreiheit im Hinblick auf (beispielsweise intensitätsändernde und/oder richtungsändernde und/oder polarisationsändernde und/oder phasenverschiebende) Defekte. Schritt 132 kann das Inspektionsverfahren 110 von Fig. 16 aufweisen. Schritt 132 kann von dem Inspektionssystem 10, 210 oder 310 automatisch ausgeführt werden.

Bei 133 wird überprüft, ob der transparente Prüfling anhand der Auswertung des bei Durchlicht-Hellfeld-Beleuchtung erfassten Bildes als defektfrei eingestuft werden kann. Bei Vorliegen eines Defekts wird der transparente Prüfling verworfen und das Verfahren kehrt zu 131 zurück, um den nächsten Kandidaten zur Montage in der optischen Vorrichtung oder dem optischen System zu prüfen.

Bei 134 wird der transparente Prüfling, der vom Inspektionssystem 10, 210 oder 310 als defektfrei bestimmt wurde, in der optischen Vorrichtung oder dem optischen System montiert.

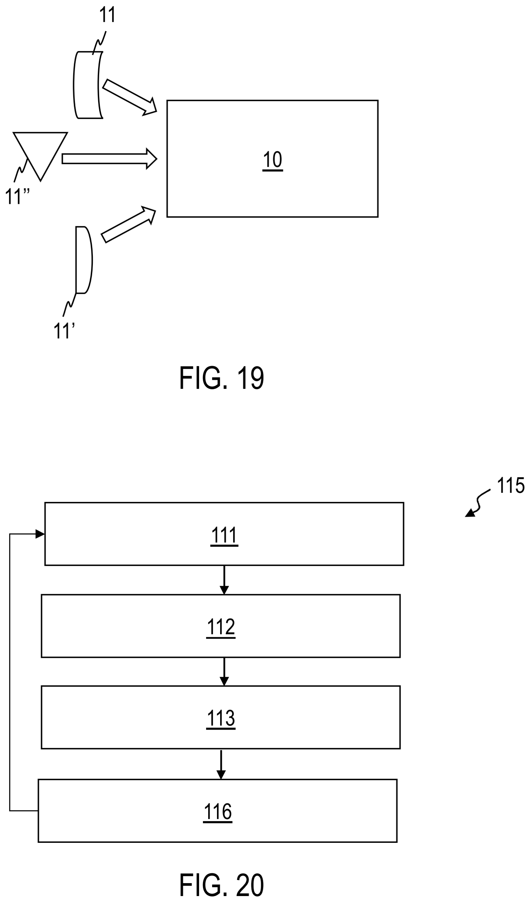

Fig. 19 veranschaulicht, dass das Inspektionssystem 10, 210 oder 310 und Inspektionsverfahren eingerichtet ist, die Prüfung auf Defektfreiheit für Prüflinge mit unterschiedlichen Oberflächengeometrien auszuführen. Das Inspektionssystem 10, 210 oder 310 und Inspektionsverfahren können eingerichtet sein, die Prüfung auf Defektfreiheit für Prüflinge auszuführen, die Linsen 11, 11' mit unterschiedlichen Linsengeometrien (sogar unterschiedlichen Linsentypen), Prismen 11", Scheiben und/oder andere transparente optische Komponenten aufweisen. Bei Ausführungsformen, bei denen kollimiertes Auflicht 44 auf den transparenten Prüfling 11 eingestrahlt wird, um nach Retroreflexion am Retroreflektor 32 das erste Strahlenbündel bereitzustellen (Fig. 3, Fig. 4 und Fig. 5; Fig. 6; Fig. 7), ist keine Anpassung des Beleuchtungssystems 20 erforderlich, um das erste Strahlenbündel 51 bereitzustellen, das von der Oberflächengeometrie des optischen Prüflings abhängt.

Fig. 20 ist ein Flussdiagramm eines Inspektionsverfahrens 115. Das Inspektionsverfahren 115 kann von oder mit dem Inspektionssystem 10, 210 oder 310 automatisch ausgeführt werden.

Schritte 111-113 können wie unter Bezugnahme auf Fig. 16 beschrieben ausgeführt werden.

Bei 116 wird ein weiterer transparenter Prüfling zur Prüfung empfangen, der eine weitere Oberflächengeometrie aufweist, die von der Oberflächengeometrie des vorangehend geprüften transparenten Prüflings verschieden ist. Die Prüfung auf Defektfreiheit (Schritte 111-113) wird für den weiteren Prüfling ausgeführt, wobei keine Anpassung des Beleuchtungssystems 20 erforderlich ist, um das erste Strahlenbündel 51 bereitzustellen, das nunmehr von der weiteren Oberflächengeometrie des weiteren transparenten Prüflings abhängig ist.

Während Ausführungsbeispiele beschrieben wurden, die bei Systemen der industriellen Fertigung oder Qualitätskontrolle eingesetzt werden können, können die offenbarten Techniken auch in anderen Anwendungsgebieten eingesetzt werden.

Die vorliegende Offenbarung umfasst auch Ausführungsformen mit jeglicher Kombination von Merkmalen, die zu verschiedenen Ausführungsformen genannt oder gezeigt sind. Sie umfasst ebenfalls einzelne Merkmale in den Figuren, auch wenn sie dort im Zusammenhang mit anderen Merkmalen gezeigt sind und/oder vorstehend oder nachfolgend nicht genannt sind. Auch können die in den Figuren und der Beschreibung beschriebenen Alternativen von Ausführungsformen und einzelne Alternativen deren Merkmale vom Erfindungsgegenstand beziehungsweise von den offenbarten Gegenständen ausgeschlossen sein.

Die Ausdrücke "umfassen" sowie "aufweisen" und Ableitungen davon zeigen eine nichtabschließende Beziehung an und schließen das Vorhandensein anderer Elemente oder Schritte nicht aus. Der unbestimmte Artikel "ein" bzw. "eine" und Ableitungen davon schließt nicht aus, dass eine Mehrzahl der entsprechenden Elemente vorhanden ist. Die Funktionen mehrerer in den Ansprüchen aufgeführter Merkmale können durch eine Einheit beziehungsweise einen Schritt erfüllt sein.

Ausführungsbeispiele der Erfindung stellen verbesserte Techniken zur Prüfung auf Defektfreiheit von transparenten Prüflingen unter Verwendung optischer Methoden bereit. Die Techniken ermöglichen eine zuverlässige und robuste automatische Verifizierung, dass der transparente Prüfling frei von intensitätsändernden Defekten ist und frei von richtungsändernden Defekten ist.

Ausführungsbeispiele können zur Prüfung gemäß ISO 10110-7 (5/Prüfung) eingesetzt werden, ohne hierauf beschränkt zu sein.

## Patentansprüche

1. Inspektionsverfahren zum Prüfen eines transparenten Prüflings (11; 11'; 11") auf eine Defektfreiheit, wobei das Inspektionsverfahren aufweist:
Bereitstellen einer Durchlicht-Hellfeld-Beleuchtung durch ein Beleuchtungssystem (20), wobei das Beleuchtungssystem (20) eine Konditioniereinrichtung (30) zum Bereitstellen eines auf den transparenten Prüfling (11; 11'; 11") einfallenden ersten Strahlenbündels (51; 251; 351) aufweist, das von einer Oberflächengeometrie (12) des transparenten Prüflings (11; 11'; 11") derart abhängt, dass nach Durchtritt durch den transparenten Prüfling (11; 11'; 11") ein zweites Strahlenbündel (52; 53; 54) resultiert, welches im Falle der Defektfreiheit des transparenten Prüflings (11) ein kollimiertes Strahlenbündel (52) ist; und
Erfassen wenigstens eines Bildes des transparenten Prüflings (11; 11'; 11") durch eine Bilderfassungseinrichtung (27) bei Beleuchtung des optischen Prüflings (11; 11'; 11") mit der Durchlicht-Hellfeld-Beleuchtung;
wobei die Konditioniereinrichtung (30) eine Kollimationsoptik (31) aufweist, und wobei die Konditioniereinrichtung (30) ferner wenigstens eine der folgenden Komponenten aufweist, um das erste Strahlenbündel (51; 251; 351) in Richtung des transparenten Prüflings (11; 11'; 11") zu lenken:
einen Retroreflektor (32); und/oder
einen räumlichen Lichtmodulator (36).

2. Inspektionsverfahren nach Anspruch 1, wobei die Konditioniereinrichtung (30) das erste Strahlenbündel (51; 251; 351) derart konditioniert, dass das zweite Strahlenbündel (52; 53; 54)
im Falle der Defektfreiheit ein Bündel von Parallelstrahlen ist (52); und
bei Vorliegen eines intensitätsändernden und/oder richtungsändernden Defekts (13) des transparenten Prüflings (11; 11'; 11") ein Querprofil mit einer durch den intensitätsändernden und/oder richtungsändernden Defekt (13) verursachten Inhomogenität aufweist.

3. Inspektionsverfahren nach einem der vorhergehenden Ansprüche, wobei das Beleuchtungssystem (20) zum Bereitstellen des ersten Strahlenbündels (51; 251; 351) eine Lichtquelle (21) und die Konditioniereinrichtung (30) aufweist, wobei die Konditioniereinrichtung (30) den Retroreflektor (32) aufweist, wobei die Konditioniereinrichtung (30) eingerichtet ist, von der Lichtquelle (21) erzeugtes Licht nach Durchlaufen der Kollimationsoptik (31) durch den transparenten Prüfling (11; 11'; 11") auf den Retroreflektor (32) zu lenken, um das erste Strahlenbündel (51; 251; 351) als vom Retroreflektor (32) zurückgeworfenes Strahlenbündel bereitzustellen.

4. Inspektionsverfahren nach Anspruch 3, wobei die Konditioniereinrichtung (30) eingerichtet ist, das erste Strahlenbündel (51; 251; 351) bereitzustellen, ohne dass die Konditioniereinrichtung (30) in Abhängigkeit von der Oberflächengeometrie (12) angepasst und/oder gesteuert wird; und/oder
wobei die Konditioniereinrichtung (30) einen Strahlteiler (33) aufweist, der das von der Lichtquelle (21) erzeugte Licht nach Durchlaufen der Kollimationsoptik (31) auf den Retroreflektor (32) lenkt;
wobei optional der Strahlteiler (33) das zweite Strahlenbündel (52; 53; 54) zur Bilderfassungseinrichtung (27) transmittiert.

5. Inspektionsverfahren nach einem der vorhergehenden Ansprüche, ferner aufweisend ein Reduzieren oder Eliminieren von Störlichteffekten (54') unter Verwendung mehrerer Polarisationsfilter (61, 62, 63; 261, 262, 263; 361, 362).

6. Inspektionsverfahren nach Anspruch 7 mit Rückbezug auf Anspruch 3 oder Anspruch 4, wobei die mehreren Polarisationsfilter (61, 62, 63; 261, 262, 263) einen zwischen der Lichtquelle (21) und dem Strahlteiler (33) angeordneten ersten Polarisationsfilter (61; 261), einen zwischen dem transparenten Prüfling (11; 11'; 11") und dem Retroreflektor (32) angeordneten zweiten Polarisationsfilter (62; 262) und einen zwischen dem Strahlteiler (33) und der Bilderfassungseinrichtung (27) angeordneten dritten Polarisationsfilter (63; 263) aufweisen.

7. Inspektionsverfahren nach Anspruch 6, wobei eine dritte Polarisationsrichtung (66; 266) des dritten Polarisationsfilters (63; 263) relativ zu einer ersten Polarisationsrichtung (64; 264) des ersten Polarisationsfilters (61; 261) um 90° gedreht ist, so dass durch eine Reflexion an dem transparenten Prüfling (11; 11'; 11") verursachte Störlichteffekte (64') reduziert oder eliminiert werden.

8. Inspektionsverfahren nach Anspruch 3 oder Anspruch 4, wobei das Inspektionsverfahren zum Prüfen des transparenten Prüflings (11; 11'; 11") auf polarisationsändernde Defekte eingerichtet ist, wobei eine Polarisationsfilteranordnung (261-263), die mehrere Polarisationsfilter (261-263) aufweist, Strahlen eines zweiten Strahlenbündels (52), das nach einer Brechung des ersten Strahlenbündels an wenigstens einer Oberfläche des transparenten Prüflings (11; 11'; 11") resultiert, bei einer Propagation vom transparenten Prüfling (11; 11'; 11") in Richtung der Bilderfassungseinrichtung (27) selektiv abhängig davon blockiert, ob durch einen polarisationsändernden Defekt (13, 13') des transparenten Prüflings (11; 11'; 11") eine Polarisationsänderung verursacht wurde; wobei die Polarisationsfilteranordnung (261-263) einen ersten Polarisationsfilter (261), einen zweiten Polarisationsfilter (262) und einen dritten Polarisationsfilter (263) aufweist; wobei das Beleuchtungssystem (20) ferner eine Lichtquelle (21) aufweist, deren Licht (41) von der Kollimationsoptik (31) zum Bereitstellen des Auflicht-Strahlenbündels (44) kollimiert wird, und wobei
der erste Polarisationsfilter (261) entlang eines Strahlenwegs von der Lichtquelle (21) zum transparenten Prüfling (11; 11'; 11") angeordnet ist;
der zweiten Polarisationsfilter (262) zwischen dem transparenten Prüfling (11; 11'; 11") und dem Retroreflektor (32) angeordnet und eingerichtet ist, Licht mit einer durch den ersten Polarisationsfilter (261) festgelegten Polarisation durchzulassen; und
der dritten Polarisationsfilter (263) zwischen dem transparenten Prüfling (11; 11'; 11") und der Bilderfassungseinrichtung (27) angeordnet und eingerichtet ist, das Licht (52) mit der durch den ersten Polarisationsfilter festgelegten Polarisation (78) zu blockieren;
wobei optional der erste Polarisationsfilter (261) eine erste Polarisationsrichtung (264) aufweist, wobei der zweite Polarisationsfilter (262) eine zweite Polarisationsrichtung (265) aufweist, die keine Drehung relativ zur ersten Polarisationsrichtung (264) aufweist, und wobei der dritte Polarisationsfilter (263) eine dritte Polarisationsrichtung (266) aufweist, die relativ zur ersten Polarisationsrichtung (264) um 90° gedreht ist.

9. Inspektionsverfahren nach Anspruch 3 oder Anspruch 4, wobei das Inspektionsverfahren zum Prüfen des transparenten Prüflings (11; 11'; 11") auf phasenverschiebende Defekte eingerichtet ist, wobei die Lichtquelle (21) kohärentes Licht (41) ausgibt, wobei das Beleuchtungssystem (20) einen ersten Polarisationsfilter (361), einen Strahlteiler (33), der das kohärente Licht (41) nach Durchlaufen des ersten Polarisationsfilters (61) auf eine Achse (A) der Abbildungsoptik (28) einkoppelt, eine Prismengruppe (336) und den Retroreflektor (32) aufweist und ein Auflicht-Strahlenbündel (45), das nach Durchgang des von der Lichtquelle (21) erzeugtem kohärenten Licht (41) durch die Kollimationsoptik (31), den ersten Polarisationsfilter (361) und die Prismengruppe (336) resultiert, auf den transparenten Prüfling (11; 11'; 11") lenkt, so dass es vom Retroreflektor (32) nach Durchgang durch den transparenten Prüfling (11; 11'; 11") auf den transparenten Prüfling (11; 11'; 11") retroreflektiert wird, um die Durchlicht-Beleuchtung (351) bereitzustellen,
wobei ein zweiter Polarisationsfilter (362) zwischen dem Strahlteiler (33) und der Bilderfassungseinrichtung (27) angeordnet ist.

10. Inspektionsverfahren nach Anspruch 9, wobei die Prismengruppe (336) ein erstes Prisma (337) und ein zweites Prisma (338) aufweist, wobei das erste Prisma (337) und das zweite Prisma (338) relativ zueinander beweglich gelagert sind, wobei das erste Prisma (337) ein erstes doppelbrechendes Prisma (337) aufweist und wobei das zweite Prisma (338) ein zweites doppelbrechendes Prisma (338) aufweist.

11. Inspektionsverfahren nach einem der vorhergehenden Ansprüche, ferner aufweisend ein Hervorrufen einer Bewegung wenigstens einer Komponente (32) der Konditioniereinrichtung (30) durch einen Antrieb (90), um die wenigstens eine Komponente (32) während einer Belichtungszeit (95) zum Erfassen eines Bildes des wenigstens einen Bildes zu bewegen.

12. Inspektionsverfahren nach Anspruch 11, wobei die Konditioniereinrichtung (30) die Kollimationsoptik (31) und einen Retroreflektor (32) aufweist, und wobei der Antrieb (90) einen Exzenterantrieb (91, 92) aufweist, der den Retroreflektor (32) bewegt.

13. Inspektionsverfahren nach Anspruch 12, wobei der Exzenterantrieb (91, 92) ein rotationsgesperrter Exzenterantrieb (91, 92, 93) ist und die Bewegung mit einer Periodendauer (97) hervorruft, wobei die Belichtungszeit (95) dividiert durch die Periodendauer (97) wenigstens gleich drei, wenigstens gleich vier, oder wenigstens gleich fünf ist.

14. Herstellungsverfahren für eine optische Vorrichtung (127) oder ein optisches System (127), aufweisend:
Ausführen des Inspektionsverfahren nach einem der vorhergehenden Ansprüche zum Prüfen eines transparenten Prüflings (11; 11'; 11") auf eine Defektfreiheit im Hinblick auf intensitätsändernde und/oder richtungsändernde Defekte (13); und
Herstellen der optischen Vorrichtung (127) oder des optischen Systems (127), wobei der transparente Prüfling (11; 11'; 11") selektiv im Falle der Defektfreiheit zum Herstellen der optischen Vorrichtung (127) oder des optischen Systems (127) verwendet wird.

15. Inspektionssystem (10; 210; 310) zum Prüfen eines transparenten Prüflings (11; 11'; 11") auf eine Defektfreiheit, wobei das Inspektionssystem (10) aufweist:
ein Beleuchtungssystem (20) zum Bereitstellen einer Durchlicht-Hellfeld-Beleuchtung; und
eine Bilderfassungseinrichtung (27) zum Erfassen wenigstens eines Bildes des transparenten Prüflings (11; 11'; 11") bei Beleuchtung des optischen Prüflings (11; 11'; 11") mit der Durchlicht-Hellfeld-Beleuchtung;
wobei das Beleuchtungssystem (20) eine Konditioniereinrichtung (30) zum Bereitstellen eines auf den transparenten Prüfling (11; 11'; 11") einfallenden ersten Strahlenbündels (51; 251; 351) aufweist und so eingerichtet ist, dass das erste Strahlenbündel (51; 251; 351) von einer Oberflächengeometrie (12) des transparenten Prüflings (11; 11'; 11") derart abhängt, dass nach Durchtritt durch den transparenten Prüfling (11; 11'; 11") ein zweites Strahlenbündel (52; 53; 54) resultiert, welches im Falle der Defektfreiheit des transparenten Prüflings (11) ein kollimiertes Strahlenbündel (52) ist,
wobei die Konditioniereinrichtung (30) eine Kollimationsoptik (37) aufweist, und wobei die Konditioniereinrichtung (30) ferner wenigstens eine der folgenden Komponenten aufweist, um das erste Strahlenbündel (51; 251; 351) in Richtung des transparenten Prüflings (11; 11'; 11") zu lenken:
einen Retroreflektor (32); und/oder
einen räumlichen Lichtmodulator (36).
